(19) Europäisches Patentamt
European Patent Office
Office européen des brevets

(11) **EP 3 591 876 B1**

(12) **EUROPEAN PATENT SPECIFICATION**

(45) Date of publication and mention
of the grant of the patent:
**18.10.2023 Bulletin 2023/42**

(51) International Patent Classification (IPC):
**H04L 1/1822** (2023.01)   **H04L 1/1829** (2023.01)
**H04L 1/1867** (2023.01)

(21) Application number: **18770343.4**

(52) Cooperative Patent Classification (CPC):
**H04L 1/1822; H04L 1/1835; H04L 1/1887**

(22) Date of filing: **22.03.2018**

(86) International application number:
**PCT/CN2018/080081**

(87) International publication number:
**WO 2018/171686 (27.09.2018 Gazette 2018/39)**

(54) **DATA TRANSMISSION METHOD AND RELATED DEVICE**

DATENÜBERTRAGUNGSVERFAHREN UND ZUGEHÖRIGE VORRICHTUNG

PROCÉDÉ DE TRANSMISSION DE DONNÉES ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 CN 201710184905
16.06.2017 CN 201710459440**

(43) Date of publication of application:
**08.01.2020 Bulletin 2020/02**

(73) Proprietor: **Huawei Technologies Co., Ltd.
Longgang District
Shenzhen, Guangdong 518129 (CN)**

(72) Inventors:
• **XU, Xiuqiang**
  **Shenzhen**
  **Guangdong 518129 (CN)**
• **WU, Yiqun**
  **Shenzhen**
  **Guangdong 518129 (CN)**
• **CHEN, Yan**
  **Shenzhen**
  **Guangdong 518129 (CN)**
• **DU, Yinggang**
  **Shenzhen**
  **Guangdong 518129 (CN)**
• **WANG, Yi**
  **Shenzhen**
  **Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2015/188557       CN-A- 105 187 173
CN-A- 105 978 671        CN-A- 106 130 701**

• **SAMSUNG: "Discussion on
grant-free/contention-based non-orthogonal
multiple access", 3GPP DRAFT; R1-166752, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no.
Gothenburg, Sweden; 20160822 - 20160826 21
August 2016 (2016-08-21), XP051140361,
Retrieved from the Internet:
URL:http://www.3gpp.org/ftp/Meetings_3GPP_
SYNC/RAN1/Docs/ [retrieved on 2016-08-21]**
• **ERICSSON: "On UL grant-free transmission",
3GPP DRAFT; R1-1701871, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Athens,
Greece; 20170213 - 20170217 12 February 2017
(2017-02-12), XP051209036, Retrieved from the
Internet:
URL:http://www.3gpp.org/ftp/Meetings_3GPP_
SYNC/RAN1/Docs/ [retrieved on 2017-02-12]**

- **LENOVO: "HARQ Design for UL Grant-Free URLLC Transmission", 3GPP TSG RAN WG1 NRAd-Hoc Meeting R1-1700557, 20 January 2017 (2017-01-20), XP051208087,**

**Description**

**TECHNICAL FIELD**

This application relates to the field of wireless communications technologies, and in particular, to a data transmission method and a related device.

**BACKGROUND**

In a mobile communications system, reliability of data transmission can be improved by using a hybrid automatic repeat request (Hybrid Auto Repeat Request, HARQ) technology. A specific implementation of the HARQ technology is that a first device initially transmits one piece of data to a second device, and waits for feedback information sent by the second device for the data. If the feedback information received by the first device indicates that the data is not correctly received by the second device, the first device may retransmit information in the data to the second device. The initially transmitted data herein may be defined as initial transmission data, and the retransmitted data herein may be defined as retransmission data.

During specific implementation, the first device may be configured with a HARQ entity, and the HARQ entity may be managed by a MAC (Media Access Control, MAC) entity configured in the first device. The HARQ entity can manage a plurality of HARQ processes, each HARQ process corresponds to one HARQ buffer (buffer), and the HARQ buffer is configured to store data that is being sent. The first device transmits data in one HARQ process to the second device. After receiving the data, the second device needs to first determine a HARQ process corresponding to the data, and may further put the data into a HARQ buffer corresponding to the HARQ process in the second device, and wait for the second device to further process the data. If the second device determines that the data is not correctly received, the second device sends feedback information to the first device, and the feedback information carries information about the HARQ process corresponding to the data.

When the second device determines the HARQ process corresponding to the received data, a HARQ process number of the HARQ process is related to information about a slot used by the first device to transmit the corresponding data. For example, the first device transmits one piece of data in one slot, the second device can receive the data in the slot, and the second device can determine, by using a slot number of the slot, a HARQ process number corresponding to the data.

In the prior art, because of a correlation between a HARQ process number and a slot, the first device can transmit data corresponding to one HARQ process number in only one slot, and the data includes initial transmission data or retransmission data. In a current slot, if it is detected that there is data to be transmitted in the current slot, and if a HARQ process corresponding to the current slot is unavailable, to-be-transmitted data in a system cannot be transmitted in the current slot by using the HARQ process. In this way, transmission of the to-be-transmitted data in the system needs to be delayed, thereby reducing communication efficiency.

"Discussion on grant-free/contention-based non-orthogonal multiple access" (SAMSUNG, vol. RAN WG1, no. Gothenburg, Sweden; 20160822 - 20160826, (20160821), 3GPP DRAFT; R1-166752, 3RD GENERATION PARTNERSHIP PROJECT (3GPP)) discloses that multiple access resources are pre-assigned to UEs. "On UL grant-free transmission" (ERICSSON, vol. RAN WG1, no. Athens, Greece; 20170213 - 20170217, (20170212), 3GPP DRAFT; R1-1701871, 3RD GENERATION PARTNERSHIP PROJECT (3GPP)) discloses that multiple HARQ processes are needed for UL grant-free resources.

**SUMMARY**

Embodiments of this application provide a data transmission method and a related device according to the independent claims, to reduce a data transmission latency.

A data transmission method performed by a first device is provided according to independent claim 1. Preferred embodiments are described in the dependent claims. A first device is provided according to independent claim 14.

**BRIEF DESCRIPTION OF DRAWINGS**

To describe the technical solutions in the embodiments of this application or in the background more clearly, the following describes the accompanying drawings required for describing the embodiments of this application or the background.

FIG. 1 is a schematic architectural diagram of a wireless communications system according to an embodiment of this application;

FIG. 2 is a schematic flowchart of a data transmission method according to an embodiment of this application;

FIG. 3A and FIG. 3B are schematic diagrams of configuration of some grant-free resources according to an embodiment of this application;

FIG. 4 is a schematic flowchart of another data transmission method according to an embodiment of this application;

FIG. 5A, FIG. 5B, FIG. 6, and FIG. 7 are schematic diagrams of correspondences between some grant-free resources and HARQ process numbers according to an embodiment of this application;

FIG. 8 is a schematic diagram of a time sequence of data transmission implemented by using a first subband group and a second subband group according to an embodiment of this application;

FIG. 9 is a schematic flowchart of another data transmission method according to an embodiment of this application;

FIG. 10 is a schematic diagram of a time sequence of data transmission implemented by using a first process and a second process in a same slot according to an embodiment of this application;

FIG. 11 is a schematic structural diagram of a first device according to an embodiment of this application;

FIG. 12 is a schematic structural diagram of a second device according to an embodiment of this application;

FIG. 13 is a schematic structural diagram of another first device according to an embodiment of this application;

FIG. 14 is a schematic structural diagram of another second device according to an embodiment of this application;

FIG. 15 is a functional block diagram of a first device according to an embodiment of this application;

FIG. 16 is a functional block diagram of a second device according to an embodiment of this application;

FIG. 17 is a functional block diagram of a first device according to an embodiment of this application; and

FIG. 18 is a functional block diagram of a second device according to an embodiment of this application.

## DESCRIPTION OF EMBODIMENTS

Terms used in an implementation part of this application are merely used to explain specific embodiments of this application, and are not intended to limit this application.

For ease of understanding the implementation of this application, a wireless communications system in the embodiments of this application is first introduced.

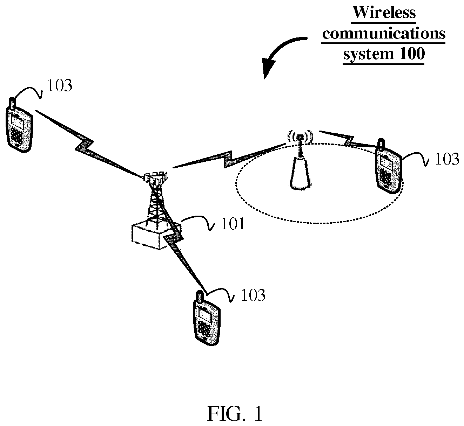

FIG. 1 shows a wireless communications system 100 in this application. The wireless communications system includes a base station (Base Station) 101 and user equipment (User Equipment) 103.

In some embodiments of this application, the base station 101 may include a base transceiver station (Base Transceiver Station), a wireless transceiver, a basic service set (Basic Service Set, BSS), one extended service set (Extended Service Set, ESS), a NodeB, an eNodeB, a HeNodeB, a relay, a femto, a pico, or a base station device that uses a 5G technology standard such as a gNodeB (gNB). The wireless communications system 100 may include several different types of base stations 101 such as a macro base station (macro base station) and a micro base station (micro base station). The base station 101 may use different radio technologies such as a cell radio access technology or a WLAN radio access technology.

The user equipment 103 may be distributed in the entire wireless communications system 100, and may be static or mobile. In some embodiments of this application, the user equipment 103 may include a mobile device, a mobile station (mobile station), a mobile unit (mobile unit), a wireless unit, a remote unit, a user agent, a mobile client, a relay, user equipment where a 5G technology standard isapplied, or the like.

Data transmission can be implemented between the base station 101 and the user equipment 103 by using a radio access network (Radio Access Network, RAN).

In some embodiments of this application, a first device may be a base station, and correspondingly, a second device may be user equipment. Alternatively, in some other embodiments of this application, the first device may be user equipment, and correspondingly, the second device may be a base station. This is not specifically limited in this application.

With reference to the foregoing system, the following describes some application scenarios in the embodiments of this application.

In a conventional wireless communications system, for example, a long term evolution (Long Term Evolution, LTE) system, the first device performs data transmission based on some grant-based (Grant-Based) resources. If the first device needs to send data to the second device, the data usually needs to be sent to the second device on a resource agreed on by the two devices. This may be a synchronous HARQ manner. Alternatively, after receiving scheduling information of the second device, the first device can send data to the second device based on a resource indicated by the scheduling information. This may be an asynchronous HARQ manner. It may be understood that in the foregoing manner both the agreed resource and the resource indicated by the scheduling information are grant-based resources. In a current system, to clearly determine a HARQ process corresponding to data received in a current slot, only one HARQ process number is configured for one slot, and the HARQ process number corresponds to the slot. For example, if a HARQ process number of a HARQ process corresponding to a slot number of slot 0 is HARQ 0, only data in the HARQ process corresponding to the HARQ 0 can be transmitted in the slot 0. Resources occupied for data transmission in the slot 0 may further include a frequency domain resource, and the frequency domain resource is a grant-based resource. Initial transmission data or retransmission data in the HARQ process corresponding to the HARQ 0 can be transmitted in the slot 0.

In one case, retransmission data in a HARQ process corresponding to a current slot is transmitted in the current slot based on an agreement or an indication of scheduling information. If the first device detects to-be-transmitted data, for example, the first device detects that there is data in a system buffer, and because the retransmission data in the HARQ process corresponding to the current slot needs to be transmitted in the current slot, transmission of the to-be-transmitted data detected by the first device needs to be delayed. In this way, a data transmission time is prolonged, and data communication efficiency is low.

In another case, if there is no data buffered in a HARQ process corresponding to a current slot, and the first device detects to-be-transmitted data, the to-be-transmitted data may be buffered into the HARQ process corresponding to the current slot. Then, the first device still detects that there is data in a system buffer, the data still in the system buffer needs to be buffered into another HARQ process, and data in the another HARQ process can only be transmitted in a slot corresponding to the another HARQ process. In this way, similarly, a data transmission time is prolonged, and data communication efficiency is low.

In a 5th generation (5th Generation) communications technology standard, ultra-reliable and low-latency communications (Ultra Reliable and Low Latency Communication, URLLC) is provided. To ensure a low latency of data transmission, the URLLC can provide grant-free (Grant free) resources for a first device (for example, UE). When the first device has a data transmission requirement, the first device may determine which resource in grant-free resources is used to transmit data to the second device, and the second device does not need to specify a transmission resource for the transmission. The grant-free resources that can be used by the first device may be preconfigured by the second device, and/or may be notified by the second device by using dynamic signaling, or may be selected by the first device based on event driving, or may be predefined. In this application, a manner of preconfiguring is implemented by the second device by configuring radio resource control (Radio Resource Control, RRC) signaling. For example, the first device is UE, the RRC signaling may be UE specific signaling (in other words, only available for single UE), or user group signaling (in other words, available for all UEs included in a user group). Alternatively, the RRC signaling may be broadcast signaling. Dynamic signaling includes physical layer signaling, in other words, a grant-free transmission resource may be notified by using control information carried on a physical layer downlink control channel. In the embodiments of the present invention, the physical layer downlink control channel may include a physical downlink control channel (Physical Downlink Control Channel, PDCCH) or an enhanced physical downlink control channel (Enhanced Physical Downlink Control Channel, EPDCCH), or another physical downlink channel such as a downlink channel used in the 5th generation (5th Generation) communications technology standard. This is not specifically limited herein. It should be noted that when the grant-free transmission resource is preconfigured by the second device and is notified by using the dynamic signaling of the second device, one implementation is that the second device may preconfigure a plurality of grant-free transmission resources, and then use the dynamic signaling to notify the first device of a specific grant-free transmission resource that is to be used. The first device makes a selection based on event driving, for example, determines the grant-free transmission resource used to transmit the system bits based on a service transmission requirement.

Based on the foregoing application scenario, how to use the grant-free resource to transmit the data of the plurality of HARQ processes in the current slot and how to determine a correspondence between the grant-free resource and the HARQ process is a technical problem to be resolved in this application.

With reference to the foregoing system and application scenario, the following describes method embodiments disclosed in the embodiments of this application.

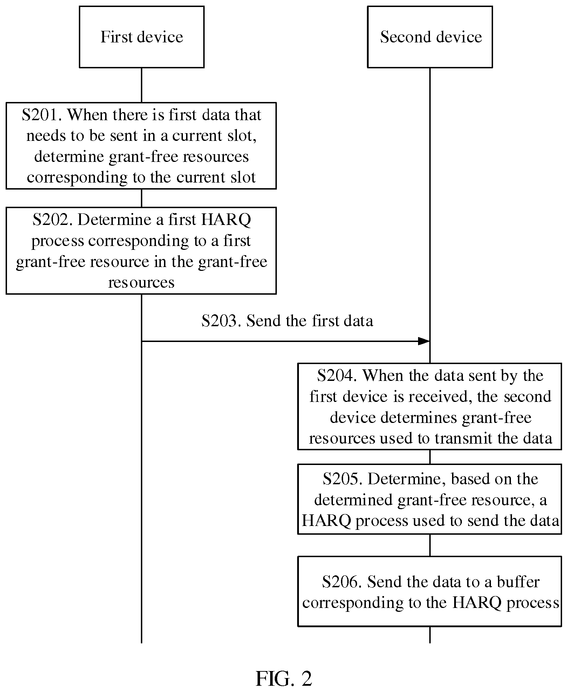

FIG. 2 is a data transmission method according to an embodiment of this application. The method according to the invention includes steps S201, S202 and S203. The method may include steps S204, S205, S206.

Step S201. When there is first data that needs to be sent in a current slot, a first device determines grant-free resources corresponding to the current slot.

In some possible implementations, the data described in this application may be a transmission block (Transmission Block, TB). When detecting data in a buffer in the first device, the first device may determine the data as initial transmission data. If there are a plurality of pieces of data in the buffer of the first device, it is determined that the plurality of pieces of initial transmission data need to be transmitted.

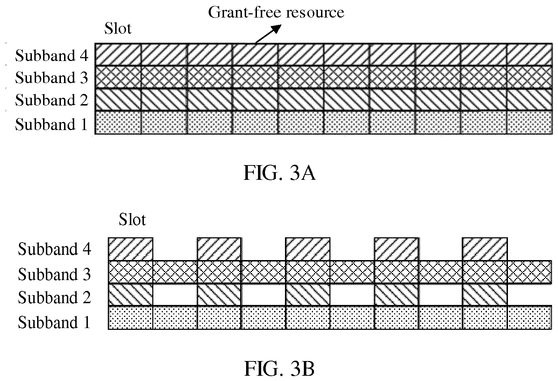

In some possible implementations, the first device can determine the grant-free resource corresponding to the current slot. The current slot can correspond to at least one grant-free resource. The following describes the grant-free resource in this application with reference to FIG. 3A to FIG. 3B. Specifically, the first device may detect whether the buffer is empty by using a configured MAC entity. If the buffer is not empty, it indicates that the first device has data that needs to be transmitted.

N subbands may be configured for the first device in frequency domain. N is an integer greater than or equal to 1. For example, in FIG. 3A and FIG. 3B, four subbands are configured for the first device in frequency domain, and subband numbers corresponding to the four subbands are subband 1, subband 2, subband 3, and subband 4, respectively. Bandwidth of all configured subbands may be the same or different. Different subbands do not overlap in frequency domain. In this embodiment of this application, one slot may be one time transmission unit. For example, one slot may be represented as a transmission time interval (Transmission Time Interval, TTI). The TTI may be used as a minimum time unit for data transmission, or a minimum time unit for data scheduling. A time length of the TTI is 1 millisecond or 0.5 milliseconds. Time lengths of slots in FIG. 3A and FIG. 3B are merely an example, and do not constitute a limitation to this application. In this embodiment of this application, a time-frequency resource block that is defined by one or more consecutive slots in time domain and one subband in frequency domain is determined as one grant-free resource (Grand-free resource, GF resource). In FIG. 3A and FIG. 3B, for example, a time-frequency resource block that is defined by one slot and one subband is used as one grant-free resource. Configuration periods (P_n) of the grant-free resource at all subbands may be the same or different. It may be understood that the configuration period of the grant-free resource is a time interval between two adjacent grant-free resources at the subband. As shown in FIG. 3A, configuration periods of the grant-free resources at the subband 1 to the subband 4 are the same, and each are 1. To be specific, the grant-free resource is configured in each slot at the subband 1 to the subband 4. As shown in FIG. 3B, configuration periods of grant-free resources at the subband 1 and the subband 3 are the same, and the configuration period is 1. Configuration periods of grant-free resources at the subband 2 and the subband 4 are the same, and the configuration period is 2.

In some possible implementations, when detecting that there is data that needs to be transmitted and that initial transmission data needs to be transmitted in the current slot, the first device may first determine whether a grant-based resource is available. If the grant-based resource is unavailable, it may be determined that a grant-free resource corresponding to the current slot is used. Alternatively, when detecting that there is data that needs to be transmitted, the first device may directly determine to use a grant-free resource corresponding to the current slot.

Step S202. The first device determines a first HARQ process corresponding to a first grant-free resource in the grant-free resources.

In some possible implementations, after determining the first grant-free resource in the grant-free resources corresponding to the current slot, the first device may sequentially determine a HARQ process corresponding to each grant-free resource, to further determine whether the grant-free resource can be used to transmit the initial transmission data. The first device may first determine the first HARQ process corresponding to the first grant-free resource in the grant-free resources. A specific correspondence between the grant-free resource and the HARQ process is not specifically limited herein.

It should be noted that when the current slot corresponds to a plurality of grant-free resources, when the first device selects one of the plurality of grant-free resources and determines a HARQ process corresponding to the grant-free resource, the first device may select the grant-free resource in a random manner. Alternatively, the first device may determine, based on a size of the to-be-transmitted data, a grant-free resource that matches the to-be-transmitted data. For example, when the to-be-transmitted data is relatively large, a grant-free resource corresponding to a high-order modulation and coding scheme (Modulation and Coding Scheme, MCS) may be first selected, or a grant-free resource at a subband with relatively wide bandwidth may be first selected.

Step S203. Send, in the current slot, the first data to a second device on the first grant-free resource by using the first HARQ process.

During specific implementation, if there is no data in a buffer corresponding to the first HARQ process, the first device stores the to-be-transmitted data in the buffer corresponding to the first HARQ process, and sends the data in the first HARQ process to the second device in the current slot by using the first grant-free resource.

In some possible implementations, if the first HARQ process corresponding to the first grant-free resource is determined, whether the first HARQ process is occupied may be further determined. Specifically, whether there is data in a first HARQ buffer corresponding to the first HARQ process is determined. If it is determined that there is no data in the first HARQ buffer corresponding to the first HARQ process, it indicates that the first HARQ process is not occupied. When the first HARQ process is not occupied, the first HARQ process may be used to send initial transmission data, and the to-be-transmitted data may be buffered in the first HARQ buffer. If the to-be-transmitted data needs to be retransmitted, the to-be-transmitted data in the system may be found in the first HARQ process.

In some possible implementations, if it is determined that there is data in the first HARQ buffer corresponding to the first HARQ process, it indicates that the data in the first HARQ process is not completely transmitted yet, and the first HARQ process cannot be used to send the initial transmission data. Then, step S202 may be repeatedly performed to select another grant-free resource, and determine whether a HARQ process corresponding to the another grant-free resource may be used to transmit the to-be-transmitted data.

In some possible implementations, if it is determined that there is no data in the first HARQ buffer corresponding to the first HARQ process, data may be buffered in the first HARQ buffer corresponding to the first grant-free resource and sent to the second device in the current slot by using the first grant-free resource. If to-be-transmitted data still exists, the foregoing steps may be repeatedly performed until there is no to-be-transmitted data in a system, or all grant-free resources corresponding to the current slot are used to transmit data, or a threshold of a quantity of pieces of to-be-transmitted data corresponding to the current slot is reached. In this way, data of different HARQ processes can be transmitted in one slot.

Step S204. When the first data sent by the first device is received, the second device determines grant-free resources used to transmit the data.

In some possible implementations, the second device can receive the data in the current slot, and the first device and the second device can implement a transmission action of sending and receiving in the same slot. After the data is received in the current slot, the grant-free resources used to transmit the data can be determined. For example, the second device performs blind detection on a frequency domain resource, if one piece of data is received on a specific frequency band, information about a subband corresponding to the frequency band may be determined, and further, grant-free resources used to transmit the data may be determined based on the subband information and the current slot.

Step S205. The second device determines, based on the determined grant-free resources, a HARQ process used to send the data.

In some possible implementations, the second device determines the first HARQ process corresponding to the first grant-free resource. A manner in which the second device determines a correspondence between the first grant-free resource and the first HARQ process is the same as a manner in which the first device determines a correspondence between the first grant-free resource and the first HARQ process. To be specific, the first device and the second device must use a same determining manner, to ensure that the first device and the second device determine a same HARQ process. A correspondence between a grant-free resource and a HARQ process is not specifically limited herein.

Step S206. The second device sends the data to a buffer corresponding to the HARQ process.

In some possible implementations, after determining the first HARQ process, the second device may store the data in the buffer corresponding to the first HARQ process for further processing. Specifically, the second device may send feedback information to the first device, and the feedback information is used to feed back a receiving status of the data of the first HARQ process. The receiving status may include being correctly received or being incorrectly received. A specific form of the feedback information may be: an acknowledgement (Acknowledgement, ACK) indicating that the data of the first HARQ process is correctly received, and a negative acknowledgement (Negative ACKnowledgement, NACK) indicating that the data of the first HARQ process is incorrectly received.

In the embodiments of this application, when it is detected that there is data to be transmitted, the first HARQ process corresponding to the first grant-free resource in the grant-free resources may be determined by determining the grant-free resources corresponding to the current slot. If there is no data in the first HARQ process, the first HARQ process and the corresponding first grant-free resource may be used to transmit the to-be-transmitted data in the current slot, thereby reducing a phenomenon in which transmission of the to-be-transmitted data needs to be delayed.

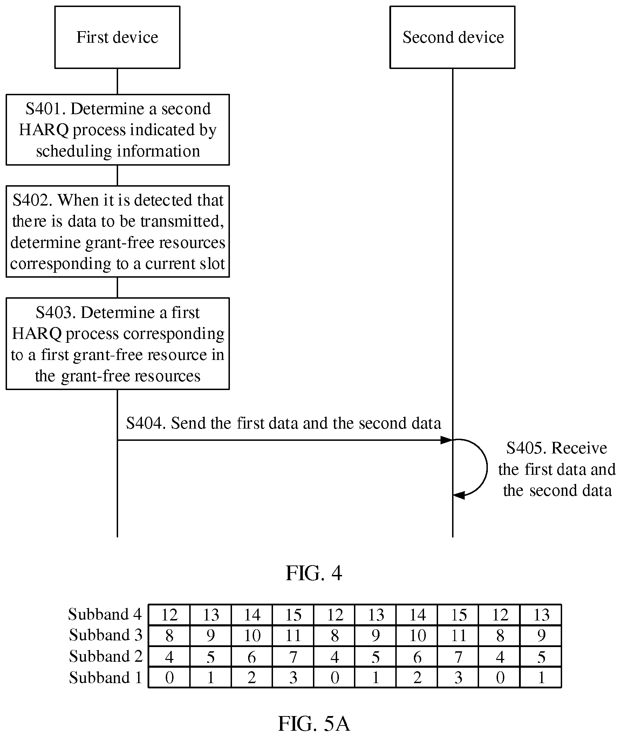

With reference to FIG. 2, FIG. 4 is a schematic flowchart of another data transmission method according to an example which is not according to the invention and is present for illustration purposes. FIG. 4 specifically describes a method in which a first device transmits data in different HARQ processes by using both a grant-based resource and a grant-free resource in a current slot. As shown in FIG. 4, the method includes the following steps.

Step S401. The first device receives scheduling information sent by a second device, where the scheduling information is used to instruct to transmit data in the current slot, and determines a second HARQ process indicated by the scheduling information.

In some feasible implementations, the first device may receive the scheduling information sent by the second device in a previous slot of the current slot, and the scheduling information is used to instruct the first device to transmit data on a specified grant-based resource, and indicate that a data transmission time is in the current slot. The transmission data indicated by the scheduling information may be initial transmission data or retransmission data. It may be understood that the specified grant-based resource herein is a frequency domain resource.

It should be noted that the grant-based resource herein may not overlap the grant-free resource at all, or may partially or completely overlap the grant-free resource. To be specific, the grant-based resource and the grant-free resource may share one frequency domain resource block. The frequency domain resource may be preconfigured, agreed, or predefined. For example, in FIG. 3A or FIG. 3B, the grant-based resource may be any grant-free resource block shown in FIG. 3A or FIG. 3B.

After the scheduling information is received, the HARQ process indicated by the scheduling information may be further determined. It should be understood that the HARQ process on the grant-based resource corresponds to the current slot, and there is no correspondence between the grant-based resource and the HARQ process.

It should be noted that the step of determining the second HARQ process indicated by the scheduling information, step S402, and step S403 are not performed in sequence. In other words, the step of determining the second HARQ process indicated by the scheduling information may be performed before step S402 or after step S403, or the step of determining the second HARQ process indicated by the scheduling information is performed when step S402 and step S403 are performed.

Step S402. When the first device detects that there is data to be transmitted, determine grant-free resources corresponding to a current slot.

Step S403. The first device determines a first HARQ process corresponding to a first grant-free resource in the grant-free resources.

For implementations in step S402 and step S403, refer to corresponding specific descriptions in the embodiment shown in FIG. 2. Details are not described herein again.

In some possible implementations, after determining the grant-free resources corresponding to the current slot, the first device may first determine whether the grant-free resource is an available grant-free resource. To be specific, whether the grant-based resource overlaps the grant-free resource is determined. If the grant-based resource partially or completely overlaps the grant-free resource, the grant-free resource is unavailable. If the grant-based resource does not overlap the grant-free resource at all, the grant-free resource is available. After determining the available grant-free resource, a grant-free resource used to transmit data is selected from the available grant-free resources based on a correspondence between a HARQ process and an available grant-free resource.

Step S404. The first device sends, in the current slot, first data in a buffer corresponding to the first HARQ process and second data in a buffer corresponding to the second HARQ process.

In some possible implementations, in the foregoing manner, the first device can send, in the current slot by using the grant-free resource, initial transmission data in the buffer corresponding to the first HARQ process, and send, in the current slot by using the grant-based resource, retransmission data or the initial transmission data in the buffer corresponding to the second HARQ process.

Optionally, if the first device transmits, by using the grant-free resource, initial transmission data in a buffer corresponding to a HARQ process, the first device may transmit, by using the grant-free resource, retransmission data in the buffer corresponding to the HARQ process. Specifically, after determining the HARQ process corresponding to the grant-free resource, if there is data in the buffer corresponding to the HARQ process, the first device may further detect whether feedback information for the HARQ process has been received, and the feedback information is used to indicate that the data sent by using the HARQ process is not correctly received. For example, if the received feedback information is a NACK, it indicates that the retransmission data in the buffer corresponding to the HARQ process needs to be transmitted. In this case, the first device may transmit, by using the grant-free resource corresponding to the HARQ process, retransmission data in the buffer corresponding to the HARQ process again without waiting for dynamic scheduling information. The retransmission data herein is data in the buffer corresponding to the HARQ process. In the foregoing manner, a data transmission latency can be reduced, and a bit rate of the data is reduced by retransmitting the data, thereby improving reliability of data transmission.

In the foregoing manner, the first device can transmit, in the current slot by using the grant-based resource, initial transmission data or retransmission data indicated by the scheduling information, and transmit initial transmission data or retransmission data by using the grant-free resource. The retransmission data transmitted by using the grant-free resource is also the initial transmission data transmitted by using the grant-free resource. Herein, the grant-free resource used to transmit the initial transmission data may be the same as the grant-free resource used to transmit the retransmission data, or the grant-free resource used to transmit the initial transmission data may be different from the grant-free resource used to transmit the retransmission data. For example, a frequency modulation technology and a frequency modulation rule are used in data transmission, and therefore the grant-free resource used to transmit the initial transmission data may be different from the grant-free resource used to transmit the retransmission data.

Step S405. The second device receives the first data and the second data.

In some possible implementations, the second device may receive the first data by performing blind detection, determine a grant-free resource used to transmit the first data, and further determine a HARQ process that corresponds to the first data and that is the same as that of the first device. The second device may receive the second data on a grant-based resource specified by the scheduling information.

The following describes specific implementations, in different HARQ types, of the method shown in FIG. 4. Herein, an example in which the first device is UE is used for description. The UE may send data to a base station based on an uplink HARQ. The uplink HARQ can be classified into an uplink synchronous HARQ and an uplink asynchronous HARQ. A difference between the uplink synchronous HARQ and the uplink asynchronous HARQ lies in that a fixed time interval exists between two consecutive times for sending same data in the uplink synchronous HARQ, and in the uplink asynchronous HARQ, a slot for sending data needs to be determined based on a dynamic scheduling signal of the base station. The uplink synchronous HARQ can be classified into an uplink synchronous adaptive HARQ and an uplink synchronous non-adaptive HARQ. A difference between the uplink synchronous adaptive HARQ and the uplink synchronous non-adaptive HARQ lies in that in the adaptive HARQ, the UE may change, based on scheduling of the base station, an MCS and/or a frequency domain resource used for next retransmission, and in the non-adaptive HARQ, the UE uses an MCS and a frequency domain resource that are the same as those of the previous time.

For the uplink synchronous adaptive HARQ, the UE may determine, based on a HARQ buffer state of a started HARQ process, scheduling information of the base station for the HARQ process, and a time interval between two consecutive times of transmission in the synchronous HARQ, whether there is a HARQ process in which retransmission data needs to be sent in the current slot on the grant-free resource. For example, if there is data in a buffer corresponding to the HARQ process, the UE receives retransmission scheduling information of the base station for the HARQ process, and it is determined that retransmission needs to be performed in the current slot based on the fixed time interval between the two consecutive times of transmission, it is determined that the retransmission data in the HARQ process needs to be sent on a grant-based resource specified by using the scheduling information.

For the uplink synchronous non-adaptive HARQ, the UE may determine, based on a HARQ buffer state of a started HARQ process, a HARQ feedback of previous transmission in the process, and a time interval between two consecutive times of transmission in the synchronous HARQ, whether there is a HARQ process in which retransmission data needs to be sent in the current slot on a grant-free resource. For example, if there is data in a buffer corresponding to the HARQ process, a feedback received by the UE from the base station for previous transmission in the same HARQ process is a negative acknowledgement (NACK), and it is determined that retransmission needs to be performed in the current slot based on the fixed time interval between the two consecutive times of transmission, it is determined that the retransmission data in the HARQ process needs to be sent in the current slot on the grant-free resource. Whether a subband to which the grant-free resource in the current slot belongs is the same as a subband to which a grant-free resource or a grant-based resource used in the previous transmission belongs depends on whether a frequency hopping technology and a specific frequency hopping rule are used. If the frequency hopping technology and the specific frequency hopping rule are used, the subbands used in the two consecutive times of transmission maybe different. Otherwise, the same subband is used.

For the asynchronous HARQ, the UE may determine, based on a HARQ buffer state of a started HARQ process, scheduling information of the base station for the HARQ process, and a time interval between a time for receiving scheduling information and a time for performing uplink transmission scheduled by using the scheduling information, whether there is a HARQ process in which retransmission data needs to be sent in the current slot on a grant-based resource specified by using the scheduling information. For example, if there is data in a buffer corresponding to the HARQ process, the UE receives retransmission scheduling information of the base station for the HARQ process, and it is determined that retransmission needs to be performed in the current slot based on the fixed time interval between the two consecutive times of transmission, it is determined that the retransmission data in the HARQ process needs to be sent on the grant-based resource specified by using the scheduling information. The time interval between the time for receiving the scheduling information and the time for performing the uplink transmission scheduled by using the scheduling information may be specified, or may be indicated by the scheduling information.

With reference to the accompanying drawings, this application provides some embodiments, which are used to describe a manner of determining the correspondence between the grant-free resource and the HARQ process in the foregoing method embodiments. The following lists several determining manners. It should be noted that the following manners are not exhaustive.

Manner 1: Determine that a grant-free resource and a process number of a HARQ process that is in a same slot as the grant-free resource are in a one-to-one correspondence. For example, the HARQ process corresponding to the grant-free resource may be determined by using Formula (1), and Formula (1) is:

$$\text{HARQ ID} = \text{floor}\,(\text{Slot\_k}/\text{P\_n})\ \text{mod}\ \text{HARQ\_number\_n} + \text{HARQ\_start\_n}$$

$$(1).$$

Herein, HARQ ID is the HARQ process number, slot_k is a slot number, n is a number of a subband, the subband n includes at least one grant-free resource, P_n is a configuration period of the grant-free resource at the subband n, HARQ_number_n is a maximum quantity of HARQ processes allowed at the subband n, HARQ_start_n is a start HARQ process number at the subband n, floor (Slot_k/P_n) represents that a result of Slot_k/P_n is rounded down, Slot_k/P_n represents that Slot_k is divided by P_n, and mod represents a modulo operation.

One HARQ ID (HARQ process number) herein corresponds to only one grant-free resource in one slot.

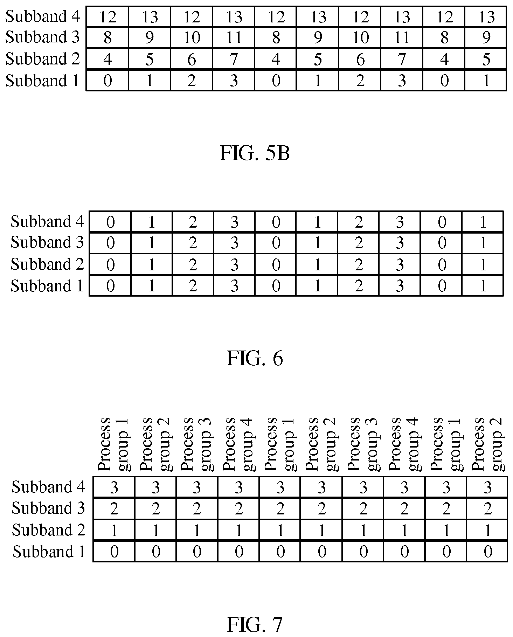

For the correspondence between the HARQ ID and the grant-free resource determined by using Formula (1), refer to FIG. 5A and FIG. 5B. In the correspondence shown in FIG. 5A, n=1, 2, 3, or 4, P_n=1, and HARQ_number_n=4. HARQ_start_1=0, HARQ_start_2=4, HARQ_start_3=8, and HARQ_start_4=12. The HARQ_number_n can represent the maximum quantity of HARQ processes allowed at the subband n. For different subbands, values of the HARQ_number_n may be different. For example, as shown in FIG. 5B, a value of the HARQ_number_n at the subband 1 to the subband 3 is 4, and a value of the HARQ_number_n at the subband 4 is 2.

By using the one-to-one correspondence between the grant-free resource and the HARQ process that are in the same slot, and a one-to-one correspondence between the HARQ process and the HARQ process number, when the first device transmits one piece of data to the second device, and when the second device receives the data, a corresponding HARQ process number can be determined by determining information about a subband used to transmit the data (for example, a subband number or subband identification information) and by using received slot information (for example, a slot number) of the data. The HARQ process herein uniquely corresponds to the HARQ process number, and the second device may obtain the HARQ process to which the transmission data belongs. If the second device needs to send retransmission scheduling information for the HARQ process to the first device, and the retransmission scheduling information carries only a HARQ process number, the first device can determine the HARQ process corresponding to the HARQ process number.

Manner 2: Determine that a grant-free resource and a process number of a HARQ process that is in a same slot as the grant-free resource are in a many-to-one correspondence. Correspondingly, the HARQ process and the HARQ process number are in a many-to-one relationship. For example, the relationship between the grant-free resource and the HARQ process number is determined by using Formula (2), and Formula (2) is:

$$HARQ\ ID = floor\ (Slot\_k/P\_n)\ mod\ HARQ\_number\_n \quad (2).$$

Herein, HARQ ID is the HARQ process number, slot_k is a slot number, n is a number of a subband, the subband n includes at least one grant-free resource, P_n is a configuration period of the grant-free resources at the subband n, HARQ_number_n is a maximum quantity of HARQ processes allowed at the subband n, floor (Slot_k/P_n) represents that a result of Slot_k/P_n is rounded down, Slot_k/P_n represents that Slot_k is divided by P_n, and mod represents a modulo operation.

For the HARQ process number determined by using Formula (2), refer to FIG. 6, and n=1, 2, 3, or 4, P_n=1, and HARQ_number_n=4. The HARQ process number herein is correlated with only the current slot. If the HARQ process corresponding to the grant-free resource is determined, information about the subband to which the grant-free resource belongs also needs to be considered. A plurality of HARQ processes corresponding to a same HARQ process number may be distinguished by using another identifier. If the second device needs to send retransmission scheduling information for data transmitted in a specific slot, both the HARQ process number and information about the subband need to be carried in the retransmission scheduling information to instruct to retransmit the data. Therefore, the first device can determine the corresponding HARQ process based on the retransmission scheduling information.

Manner 3: Divide HARQ processes into HARQ process groups, and a number of the HARQ process group corresponds to a slot, the HARQ process group may include at least one HARQ process number, and a HARQ process number and a HARQ process are in a one-to-one correspondence. A quantity of available HARQ process numbers in the HARQ process group may be determined based on a quantity of grant-free resources in a same slot. For example, if the quantity of grant-free resources in the same slot is 2, and there are four process numbers in a process group corresponding to the slot, two corresponding process numbers may be configured for the two grant-free resources according to an agreed or preset rule. For example, the process number is determined based on a number of a subband to which the grant-free resource belongs, or is determined based on a frequency value of frequency domain in which the subband to which the grant-free resource belongs is located. By setting the HARQ process group, a corresponding HARQ process number can be configured for each grant-free resource in a slot corresponding to the HARQ process group, to ensure that a corresponding HARQ process is configured for each grant-free resource. The quantity of HARQ process groups may be preconfigured, predefined, or agreed on by devices at both ends. If the quantity of the HARQ process groups are preconfigured, the quantity of the HARQ process groups may be configured for the first device by using higher layer signaling or underlying layer signaling. The higher layer signaling may be, for example, radio resource control (Radio Resource Control, RRC) signaling, a system information (System Information, SI), or the like. The underlying layer signaling may be downlink control information (Downlink Control Information, DCI). For example, a correspondence between a number of a HARQ process group and a slot is implemented by using Formula (3), and Formula (3) is:

$$HARQ\_group\_m = floor\ (Slot\_k/P)\ mod\ M \quad (3).$$

HARQ_group_m is the number of the HARQ process group, Slot_k is a slot number, P is a configuration period of a grant-free resource at each subband, M is a quantity of HARQ process groups, floor (Slot_k/P) represents that a result of Slot_k/P is rounded down, Slot_k/P represents that Slot_k is divided by P, and mod represents a modulo operation. The quantity M of process groups and the configuration period P may be preconfigured, predefined, or agreed on by devices at both ends. If the quantity M of process groups and the configuration period P are preconfigured, the second device (for example, the second device is a network device, and the first device is user equipment) may configure the quantity M of process groups and the configuration period P for the first device by using higher layer signaling or underlying layer signaling. The higher layer signaling may be, for example, radio resource control (Radio Resource Control, RRC) signaling, a system information (System Information, SI), or the like. The underlying layer signaling may be downlink control information (Downlink Control Information, DCI), or the like.

For the correspondence between the grant-free resource and the HARQ process determined by using Formula (3), refer to FIG. 7. Herein, P=1 and M=4. As shown in FIG. 7, the grant-free resource and the number of the HARQ process that is in the same slot as the grant-free resource are in a one-to-one correspondence. In addition, because the HARQ process number configured for the grant-free resource is correlated with the information about the subband, it can be learned from the FIG. 7 that HARQ process numbers corresponding to grant-free resources belonging to a same subband are the same.

The correspondence in Manner 3 may be applied to a scenario in which the first device repeatedly transmits data for K times, and repeatedly transmitting the data for K times means transmitting the data for K consecutive times within a time unit set, and the data that is repeatedly transmitted for K times may be initial transmission data or retransmission data. The data that is repeatedly transmitted for K times is the same, and it may also be understood that a same TB is repeatedly transmitted for K times. A condition for stopping the K times of repeated transmission is that K reaches a preset threshold or feedback information is received. For example, the first device repeatedly transmits data at the subband 2 for K times. It is assumed that the second device misses detection on data in a slot 0, and the second device needs to receive data in a slot 1, and requires retransmission of the data corresponding to the slot 1. If the correspondence between the grant-free resource and the HARQ process is the relationship described in Manner 1 or Manner 2, the slot 1 and the slot 0 correspond to different HARQ process numbers at the subband 2. HARQ process numbers that are determined by the second device and the first device are inconsistent. In this way, data is incorrectly transmitted. However, in the method in Manner 3, because the HARQ process numbers in different slots at the subband 2 are the same, the HARQ process numbers that are determined by the second device and the first device are the same.

If the second device sends retransmission scheduling information for data in one slot, the retransmission scheduling information needs to carry a number of a process group and process numbers in the process group, so that a process number corresponding to retransmission data required by the second device can be determined.

Manner 4: Divide subbands into subband groups, and configure one HARQ process number for each subband group. Two subband groups are used as an example for description, a HARQ process number corresponding to a first subband group is HARQ_1, and a HARQ process number corresponding to a second subband group is HARQ_2. Each subband group includes at least one subband. At least one grant-free resource is configured at each subband. In a same slot, it is allowed that both a first grant-free resource in the first subband group and a second grant-free resource in the second subband group are used. The second device may determine, based on information about a subband corresponding to transmitted data, a subband group to which the subband belongs, and further determine a HARQ process number corresponding to the subband group. The subband group to which the subband belongs may be preconfigured. For example, when configuring the grant-free resource, the second device determines the subband group corresponding to the subband to which the grant-free resource belongs.

Optionally, a priority may be configured for each subband group. If a subband group with a higher priority is available, the subband group with a higher priority is preferentially used.

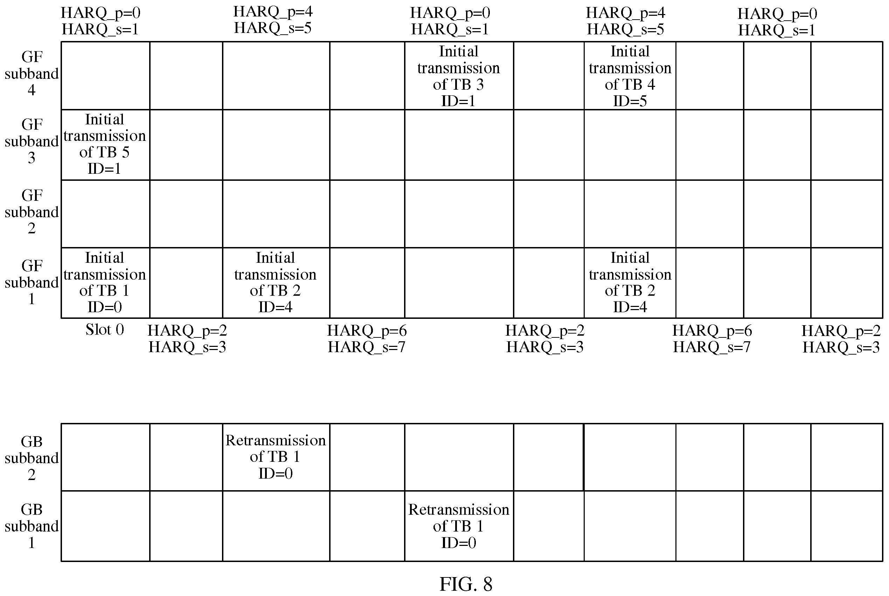

FIG. 8 is a schematic diagram of a time sequence of data transmission implemented by using a first subband group and a second subband group. In FIG. 8, the first subband group may include a GF subband 1, and the second subband group may include a GF subband 2 to a GF subband 4. Optionally, a priority of the first subband group and a priority of the second subband group may be further determined. For example, it is determined that the GF subband included in the first subband group is a primary subband, and the GF subband included in the second subband group is a secondary subband.

The GF subband is a subband at which a grant-free resource is configured. FIG. 8 also shows a GB subband 1 and a GB subband 2. The GB subband is a subband at which a grant-based resource is configured. Certainly, FIG. 8 is merely an example. The grant-based resource and the grant-free resource may also overlap. FIG. 8 shows a scenario in which the grant-based resource and the grant-free resource do not overlap. It is assumed that a HARQ process number corresponding to the first subband group is HARQ_p ID, and a HARQ process number corresponding to the second subband group is HARQ_s ID. HARQ_p ID and HARQ_s ID are correlated with a slot. For example, HARQ_p ID and HARQ_s ID may be determined according to Formula (2) and are periodically circled. In this manner, data transmission in a plurality of processes in one slot can be implemented.

For example, the first device is UE. Data transmitted by the UE is represented as TB.

In a slot 0, the UE initially transmits TB 1 by using a grant-free resource at the GF subband 1, a correspondingly used HARQ process is HARQ_p, and HARQ_p ID is 0.

In the slot 0, the UE initially transmits TB 5 by using a grant-free resource at the GF subband 4, and an ID of a correspondingly used HARQ process is 1.

It can be learned from the slot 0 that two pieces of initial transmission data can be transmitted in one slot by determining a correspondence between the grant-free resource and the HARQ process.

In a slot 2, the UE initially transmits TB 2 by using a grant-free resource at the GF subband 1, and an ID of a used HARQ process is 4.

In the slot 2, the UE retransmits the TB 1 on a grant-based resource at the GB subband 2 based on dynamic scheduling of a base station, and a HARQ process number carried in dynamic scheduling information is 0.

It can be learned from the slot 2 that the correspondence between the grant-free resource and the HARQ process is determined, so that retransmission can be performed in one slot by using the grant-based resource, and initial transmission is performed by using the grant-free resource in the first subband group.

In a slot 4, the UE retransmits the TB 1 on a grant-based resource at the GB subband 1 based on dynamic scheduling of a base station, and a HARQ process number carried in dynamic scheduling information is 0.

In the slot 4, the UE initially transmits TB 3 by using a grant-free resource at the GF subband 4. Because retransmission is performed in the HARQ process corresponding to the first subband group, the grant-free resource in the second subband group is used. A HARQ process number corresponding to the grant-free resource is 1.

It can be learned from the slot 4 that the correspondence between the grant-free resource and the HARQ process is determined, so that retransmission can be performed in one slot by using the grant-based resource, and initial transmission is performed by using the grant-free resource in the second subband group.

In a slot 6, the UE retransmits TB 2 by using a grant-free resource at the GF subband 1, and an ID of a used HARQ process is 4. Optionally, if the first subband group includes another GF subband, the TB 2 may be retransmitted on a grant-free resource at the another GF subband. For example, a frequency modulation technology is used.

In the slot 6, the UE initially transmits TB 4 by using a grant-free resource at the GF subband 4, and an ID of a used HARQ process is 5.

It can be learned from the slot 6 that the correspondence between the grant-free resource and the HARQ process is determined, so that the retransmission can be performed in one slot by using the grant-free resource, and initial transmission is performed by using the grant-free resource.

In the data transmission time sequence shown in FIG. 8, the correspondence between the grant-free resource and the HARQ process is determined by using the foregoing determining Manner 4. It should be understood that when the correspondence between the grant-free resource and the HARQ process is another correspondence, the foregoing data transmission manner may also be implemented.

Manner 5: Determine, based on a time domain resource and a frequency domain resource that correspond to the grant-free resource and a maximum quantity of HARQ processes allowed at a subband at which the grant-free resource is located, a HARQ process ID corresponding to the grant-free resource.

In a specific implementation in Manner 5, for example, a HARQ process number corresponding to the grant-free resource may be determined by using Formula (1a), and Formula (1a) is:

$$\text{HARQ ID} = f\,(\text{Slot\_k},\ P\_n,\ \text{HARQ\_number\_n}) + \text{HARQ\_start\_n} \quad (1a).$$

In another specific implementation in Manner 5, for example, a HARQ process number corresponding to the grant-free resource may be determined by using Formula (1b), and Formula (1b) is:

$$\text{HARQ ID} = f\,(\text{Slot\_k},\ P\_n,\ \text{HARQ\_number\_n}) \quad (1b).$$

In Formula (1a) and Formula (1b), HARQ ID is the HARQ process number, Slot_k is a slot number, n is a number of a subband, the subband n includes at least one grant-free resource, P_n is a configuration period of the grant-free resources at the subband n, HARQ_number_n is a maximum quantity of HARQ processes allowed at the subband n, HARQ_start n is a start HARQ process number or a preset offset value at the subband n, and f (Slot_k, P_n, HARQ_number_n) represents a function or calculation rule in which Slot_k, P_n, and HARQ_number_n are used as independent variables. In an embodiment, the start HARQ process number at the subband n may also be considered as a preset offset value.

In a specific implementation, f (Slot_k, P_n, HARQ_number_n) in Formula (1a) and Formula (1b) is specifically: f (Slot_k, P_n, HARQ_number_n) = floor (Slot_k/P_n) mod HARQ_number_n, where floor (Slot_k/P_n) represents that a result of Slot_k/P_n is rounded down, Slot_k/P_n represents that Slot_k is divided by P_n, and mod represents a modulo operation.

Manner 6: Determine, based on a time domain resource and a frequency domain resource that correspond to the grant-free resource and a maximum quantity of HARQ processes allowed at a subband at which the grant-free resource is located, a HARQ process number corresponding to the grant-free resource.

In a specific implementation in Manner 6, for example, the HARQ process number corresponding to the grant-free resource may be determined by using Formula (2a), and Formula (2a) is:

$$\text{HARQ ID} = f\,(\text{Slot\_k},\ \text{HARQ\_number\_n}) + \text{HARQ\_start\_n} \quad (2a).$$

In another specific implementation in Manner 6, for example, the HARQ process number corresponding to the grant-free resource may be determined by using Formula (2b), and Formula (2b) is:

$$HARQ\ ID = f\ (Slot\_k,\ HARQ\_number\_n)\quad(2b).$$

In Formula (2a) and Formula (2b), HARQ ID is the HARQ process number, Slot_k is a slot number, n is a number of a subband, the subband n includes at least one grant-free resource, HARQ_number_n is a maximum quantity of HARQ processes allowed at the subband n, HARQ_start_n is a start HARQ process number or an offset value at the subband n, and f (Slot_k, HARQ_number_n) represents a function or calculation rule in which Slot_k and HARQ_number_n are used as independent variables.

In a specific implementation, f (Slot_k, HARQ_number_n) in Formula (2a) and Formula (2b) may be specifically: f (Slot_k, HARQ_number_n) = Slot_k mod HARQ_number_n, where mod represents a modulo operation.

In an embodiment, as shown in FIG. 7, all HARQ processes supported by a communications system are divided into a plurality of HARQ process groups, and one HARQ process group is configured in each transmission timing unit (for example, a slot). In this implementation, a HARQ process number corresponding to the grant-free resource may be determined in Manner 7.

Manner 7: Determine a HARQ process group corresponding to a time domain resource corresponding to the grant-free resource, and determine, based on a frequency domain resource corresponding to the grant-free resource, a number of a HARQ process corresponding to the grant-free resource in the HARQ process group.

In a specific implementation, a number of the HARQ process group corresponding to the grant-free resource may be determined by using Formula (3a), and Formula (3a) is:

$$HARQ\_group\_m = Slot\_k\ mod\ M\quad(3a).$$

In Formula (3a), HARQ_group_m is the number of the HARQ process group, Slot_k is a slot number, M is a quantity of HARQ process groups, and mod represents a modulo operation.

A quantity of HARQ processes included in the HARQ process group corresponding to each slot is correlated with a quantity of grant-free resources configured in the slot. In a possible embodiment, the quantity of HARQ processes included in the HARQ process group corresponding to each slot is the same as the quantity of grant-free resources configured in the slot. In other words, one grant-free resource corresponds to one HARQ process. A number of each HARQ process in each HARQ process group may be determined based on a location of the grant-free resource corresponding to the HARQ process. A possible numbering manner of the HARQ process in the HARQ process group is shown in FIG. 7. The HARQ process is numbered based on a location of a subband to which the grant-free resource belongs. A lower location of the subband to which the grant-free resource belongs indicates a smaller HARQ process number.

Therefore, after the HARQ process group corresponding to the grant-free resource is determined according to Formula (3a), the number of the HARQ process corresponding to the grant-free resource in the HARQ process group may be determined based on a frequency domain resource location at which the grant-free resource is located.

In the foregoing various manners of determining the HARQ process number, the maximum quantity HARQ_number_n of HARQ processes, the configuration period P_n, the start HARQ process number HARQ_start_n at the subband n, and the quantity M of the HARQ process groups may be preconfigured, or predefined, or agreed on by devices at both ends (in other words, the first device and the second device). If they are preconfigured, the second device (the second device is a network device, and the first device is a terminal device) may configure them for the first device by using higher layer signaling or underlying layer signaling. The higher layer signaling may be, for example, radio resource control (Radio Resource Control, RRC) signaling, a system information(System Information, SI), or the like. The underlying layer signaling may be downlink control information (Downlink Control Information, DCI), or the like.

In an embodiment, if the second device fails to decode data sent by the first device on a grant-free resource in a specific slot (for example, a slot Slot_k), the second device sends retransmission scheduling information to the first device, to instruct the first device to retransmit the data. The retransmission scheduling information may carry information about a grant-based resource used to retransmit the data, and may further carry a number of a HARQ process used when the first device sends the data. The second device may determine the number of the HARQ process used when the first device sends the data on the grant-free resource in the slot Slot_k in any one of manners of Manner 1 to Manner 7.

In an embodiment, when the second device calculates the HARQ ID by using Formula (1b) or Formula (2b), scheduling information sent by the second device may further carry information about a subband at which the grant-free resource used by the first device to send the data in the slot Slot_k is located. The first device determines, based on the HARQ ID carried in the retransmission scheduling information and the information about the subband at which the grant

free resource used by the first device to send the data is located, that the retransmission scheduling information indicates data that needs to be retransmitted and that is in a buffer corresponding to a specific HARQ process.

In another embodiment, when the second device calculates the HARQ ID in Manner 3 or Manner 7, scheduling information sent by the second device specifically carries a number of the HARQ process group to which the HARQ process that is used when the first device sends the data belongs and a number of the HARQ process in the HARQ process group. The first device determines, based on the number of the HARQ process group and the number of the HARQ process in the HARQ process group that are carried in the retransmission scheduling information, that the retransmission scheduling information indicates data that needs to be retransmitted and that is in a buffer corresponding to a specific HARQ process.

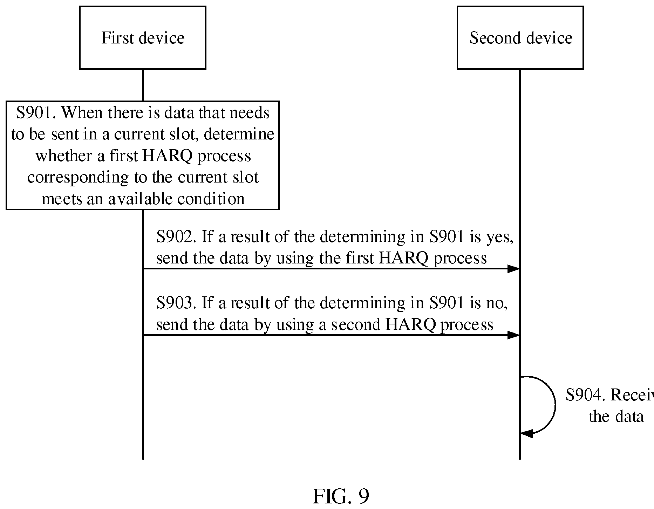

FIG. 9 is a schematic flowchart of another data transmission method according to an example which is not according to the invention and is present for illustration purposes. As shown in FIG. 9, the method may include the following steps.

Step S901. When there is data that needs to be sent in a current slot, determine whether a first HARQ process corresponding to the current slot meets an available condition.

Step S902. If it is determined that the first HARQ process meets the available condition, send, by using the first HARQ process, the data to the second device in the current slot by using a grant-free resource.

Step S903. If it is determined that the first HARQ process does not meet the available condition, send, by using a second HARQ process, the data to the second device in the current slot by using a grant-free resource.

Step S904: A second device receives the data sent by the first device in the current slot.

In some possible implementations, two HARQ processes may be configured for the current slot, and priorities of the two HARQ processes may be determined. If there is no data in buffers corresponding to the two HARQ processes, the first HARQ process with a higher priority may be used to send initial transmission data. If there is data in the buffer corresponding to the first HARQ process and the data can be retransmitted in the current slot, the first HARQ process is used to send the retransmission data, and the second HARQ process is used to send the initial transmission data.

In a possible implementation of this embodiment, a HARQ process number corresponding to the first HARQ process and/or a HARQ process number corresponding to the second HARQ process may be preconfigured, predefined, or agreed on by the first device and the second device. If the HARQ process numbers are preconfigured, the second device may configure the HARQ process numbers for the first device by using higher layer signaling or underlying layer signaling. The higher layer signaling may be, for example, radio resource control (Radio Resource Control, RRC) signaling, a system message (System Information, SI), or the like. The underlying layer signaling may be downlink control information (Downlink Control Information, DCI).

Optionally, two HARQ process groups may be configured for the current slot, and priorities of the two HARQ process groups are determined. If the two HARQ process groups each have an available HARQ process, the available HARQ process in the first HARQ process group with a higher priority may be used to send initial transmission data. If it is determined that the HARQ process in the first HARQ process group meets a condition of sending retransmission data in the current slot, the HARQ process in the second HARQ process group with a lower priority is used to send the initial transmission data. To be specific, the HARQ process in the first HARQ process group is used to send the retransmission data in the current slot, and the HARQ process in the second HARQ process group is used to send the initial transmission data.

Optionally, process numbers of the first HARQ process and the second HARQ process may be determined in a plurality of manners listed below. The determining manners described below are not exhaustive.

Manner A:

A process number HARQ_p of the first HARQ process may be determined by using Formula (4), where

$$\text{Formula (4) is: HARQ\_p} = \text{floor (Slot\_k/P) mod M} \quad (4).$$

Herein, Slot_k is a slot number of the current slot, P is a configuration period of a slot configured with a grant-free resource, and M is a maximum quantity of first HARQ processes.

A process number of the second HARQ process is notified by a base station to a terminal by using signaling, or in a preset manner. It should be noted that a same second HARQ process is used in slots in which all the grant-free resources are located.

Manner B:

A process number HARQ_p of the first HARQ process may be determined by using Formula (5):

$$HARQ\_p = 2*[floor\ (Slot\_k/P)\ mod\ M]\quad(5).$$

Herein, Slot_k is a slot number of the current slot, P is a configuration period of a slot configured with a grant-free resource, and M is a maximum quantity of first HARQ processes.

A process number HARQ_s of the second HARQ process may be determined by using Formula (6):

$$HARQ\_s = HARQ\_p + 1\quad(6).$$

Manner C:

A process number HARQ_p of the first HARQ process may be determined by using Formula (7):

$$HARQ\_p = 2*[floor\ (Slot\_k/P)\ mod\ M] + 1\quad(7).$$

Herein, Slot_k is a slot number of the current slot, P is a configuration period of a slot configured with a grant-free resource, and M is a maximum quantity of first HARQ processes.

A process number HARQ_s of the second HARQ process may be determined by using Formula (8):

$$HARQ\_s = HARQ\_p - 1\quad(8).$$

Manner D:

A process number HARQ_p of the first HARQ process may be determined by using Formula (9): HARQ_p = floor (Slot_k/P) mod M. Slot_k is a slot number of the current slot, P is a configuration period of a slot configured with a grant-free resource, and M is a maximum quantity of first HARQ processes.

A process number HARQ_s of the second HARQ process may be determined by using Formula (10): HARQ_s = HARQ_p + M, where M is the maximum quantity of first HARQ processes.

Manner E:

A process number HARQ_p of the first HARQ process may be determined by using Formula (11):

$$HARQ\_p = floor\ (Slot\_k/P)\ mod\ M + M\quad(11).$$

Herein, Slot_k is a slot number of the current slot, P is a configuration period of a slot configured with a grant-free resource, and M is a maximum quantity of first HARQ processes.

A process number HARQ_s of the second HARQ process may be determined by using Formula (12): HARQ_s = HARQ_p - M, where M is the maximum quantity of first HARQ processes.

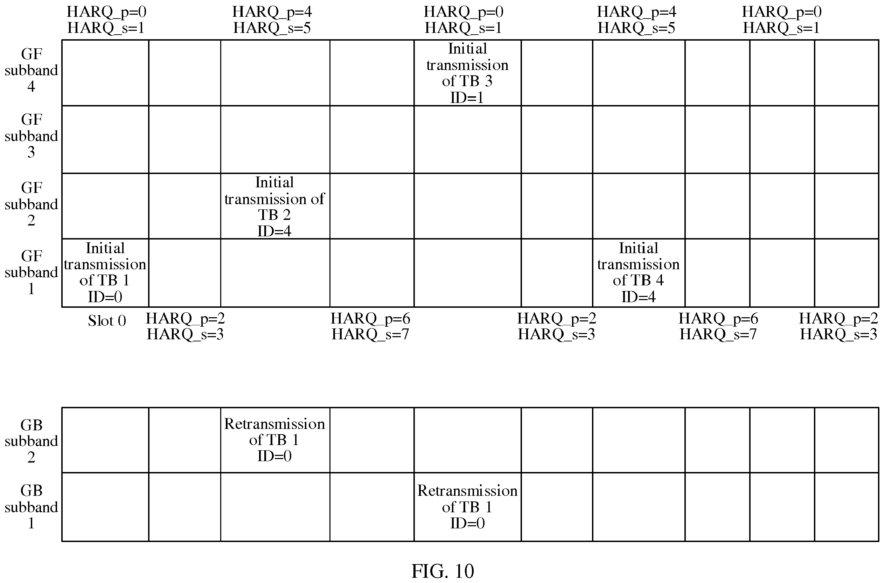

With reference to FIG. 10, the following is described by using the method in FIG. 10 as an example. FIG. 10 is a schematic diagram of a time sequence of data transmission implemented by using a first process and a second process in a same slot according to an embodiment of this application.

In FIG. 10, a process number (ID) of a first HARQ process may be determined according to Formula (5), and a process number of a second HARQ process may be determined according to Formula (6). M is 4 and P is 1. The first HARQ process may be represented as HARQ_p, and the second HARQ process may be represented as HARQ_s.

A GF subband is a subband at which a grant-free resource is configured. In FIG. 8, the GF subbands include a GF subband 1 to a GF subband 4. FIG. 10 also shows a GB subband 1 and a GB subband 2. A GB subband is a subband at which a grant-based resource is configured. Certainly, FIG. 10 is merely an example. The grant-based resource and the grant-free resource may also overlap. FIG. 10 shows a scenario in which the grant-based resource and the grant-free resource do not overlap.

For example, the first device is UE. Data transmitted by the UE is represented as TB.

In a slot 0, the UE initially transmits TB 1 by using a grant-free resource at the GF subband 1, a first HARQ process is used, and an ID of the first HARQ process is 0.

In a slot 2, the UE initially transmits TB 2 by using a grant-free resource at the GF subband 2, the first HARQ process is used, and an ID of the first HARQ process is 4.

In the slot 2, the UE retransmits the TB 1 on a grant-based resource at the GB subband 2 based on dynamic scheduling of a base station, and dynamic scheduling information carries a HARQ process 0.

It can be learned from the slot 2 that when the first HARQ process is available, the first HARQ process is preferentially used for initial transmission, and the first HARQ process can be used to perform retransmission on the grant-based resource in a same slot.

In a slot 4, the UE retransmits the TB 1 on a grant-based resource at the GB subband 1 based on dynamic scheduling of the base station, and dynamic scheduling information carries a HARQ process 0.

In the slot 4, the UE initially transmits TB 3 by using a grant-free resource at the GF subband 4. Because the first HARQ process is unavailable (scheduling information indicates that data in the first HARQ process needs to be retransmitted), the second HARQ process is used, and an ID of the second HARQ process is 1.

It can be learned from the slot 4 that when the first HARQ process is unavailable, the second HARQ process is used for initial transmission, and the first HARQ process can be used to perform retransmission on the grant-based resource in a same slot.

In this embodiment of this application, because one slot corresponds to at least two HARQ processes, one of the HARQ processes in the slot may be used for retransmission, and simultaneously the other HARQ process in the slot may be used for initial transmission.

With reference to the foregoing system and method embodiments, the following describes apparatus embodiments in the embodiments of this application.

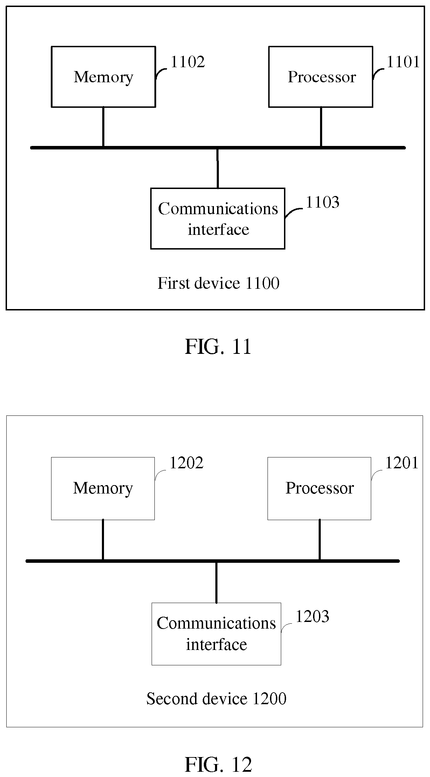

FIG. 11 is a schematic structural diagram of a first device according to an embodiment of this application. The first device 1100 includes: a processor 1101, a memory 1102, and a communications interface 1103. The processor 1101 controls wireless communication with an external network by using the communications interface 1103. The communications interface 1103 includes but is not limited to an antenna, an amplifier, a transceiver, a coupler, an LNA (Low Noise Amplifier, low noise amplifier), a duplexer, and the like. The memory 1102 includes at least one of the following: a random access memory, a non-volatile memory, and an external memory. The memory 1102 stores executable program code, and the executable program code can instruct the processor 1101 to perform the specific method disclosed in the method embodiments of the present invention, including the following steps:

when there is first data that needs to be sent in a current slot, determining grant-free resources corresponding to the current slot;
determining a first HARQ process corresponding to a first grant-free resource in the grant-free resources; and
sending, in the current slot, the first data to a second device on the first grant-free resource by using the first HARQ process.

It should be understood that the executable program code can instruct the processor 1101 to perform the method performed by the first device described in the foregoing method embodiments, for example, the method shown in FIG. 2 or FIG. 4. Details are not described herein again.

FIG. 12 is a schematic structural diagram of a second device according to an example which is not according to the invention and is present for illustration purposes. The second device 1200 includes: a processor 1201, a memory 1202, and a communications interface 1203. The processor 1201 controls wireless communication with an external network by using the communications interface 1203. The communications interface 1203 includes but is not limited to an antenna, an amplifier, a transceiver, a coupler, an LNA (Low Noise Amplifier, low noise amplifier), a duplexer, and the like. The memory 1202 includes at least one of the following: a random access memory, a non-volatile memory, and an external memory. The memory 1202 stores executable program code, and the executable program code can instruct the processor 1201 to perform the specific method disclosed in the method embodiments of the present invention, including the following steps:

when data sent by a first device is received, determine a grant-free resource used to transmit the data;

determine, based on the determined grant-free resource, a HARQ process used to send the data; and
send the data to a buffer corresponding to the HARQ process.

It should be understood that the executable program code can instruct the processor 1201 to perform the method performed by the second device described in the foregoing method embodiments, for example, the method shown in FIG. 2 or FIG. 4. Details are not described herein again.

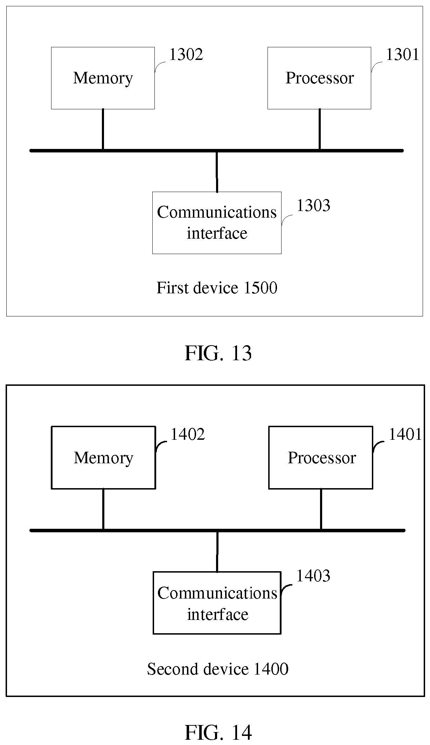

FIG. 13 is a schematic structural diagram of a first device according to an example which is not according to the invention and is present for illustration purposes. The first device 1300 includes: a processor 1301, a memory 1302, and a communications interface 1303. The processor 1301 controls wireless communication with an external network by using the communications interface 1303. The communications interface 1303 includes but is not limited to an antenna, an amplifier, a transceiver, a coupler, an LNA (Low Noise Amplifier, low noise amplifier), a duplexer, and the like. The memory 1302 includes at least one of the following: a random access memory, a non-volatile memory, and an external memory. The memory 1302 stores executable program code, and the executable program code can instruct the processor 1301 to perform the specific method disclosed in the method embodiments of the present invention, including the following steps:

when there is data that needs to be sent in a current slot, determining whether a first HARQ process corresponding to the current slot meets an available condition; and
if it is determined that the first HARQ process meets the available condition, sending, by using the first HARQ process, the data to a second device in the current slot by using a grant-free resource; or
if it is determined that the first HARQ process does not meet the available condition, sending, by using a second HARQ process, the data to a second device in the current slot by using a grant-free resource.

It should be understood that the executable program code can instruct the processor 1301 to perform the method performed by the first device described in the foregoing method embodiments, for example, the method shown in FIG. 2 or FIG. 4. Details are not described herein again.

FIG. 14 is a schematic structural diagram of a second device according to an example which is not according to the invention and is present for illustration purposes. The second device 1400 includes: a processor 1401, a memory 1402, and a communications interface 1403. The processor 1401 controls wireless communication with an external network by using the communications interface 1403. The communications interface 1403 includes but is not limited to an antenna, an amplifier, a transceiver, a coupler, an LNA (Low Noise Amplifier, low noise amplifier), a duplexer, and the like. The memory 1402 includes at least one of the following: a random access memory, a non-volatile memory, and an external memory. The memory 1402 stores executable program code, and the executable program code can instruct the processor 1401 to perform the specific method disclosed in the method embodiments of the present invention, including the following steps:

receive, in a current slot, first data sent by a first device by using a grant-free resource; and
if second data indicated by scheduling information is not received, send the first data to a buffer corresponding to a first HARQ process, where the current slot corresponds to the first HARQ process; or
if second data indicated by scheduling information is received again, send the first data to a buffer corresponding to a second HARQ process, and send the second data to the buffer corresponding to the second HARQ process, where the current slot corresponds to the second HARQ process.

Based on the hardware structure described in the foregoing embodiments and the foregoing method embodiments, the following describes a functional block diagram of a device provided in an embodiment of this application. Functional blocks of the first device may be implemented by using hardware, software, or a combination of hardware and software, to implement the solutions of the present invention. A person skilled in the art should understand that the functional blocks described in this application may be combined or separated into several subblocks to implement the solutions in the embodiments of the present invention. Therefore, the content described above in this application may support any possible combination or separation or further definition of the following function modules.

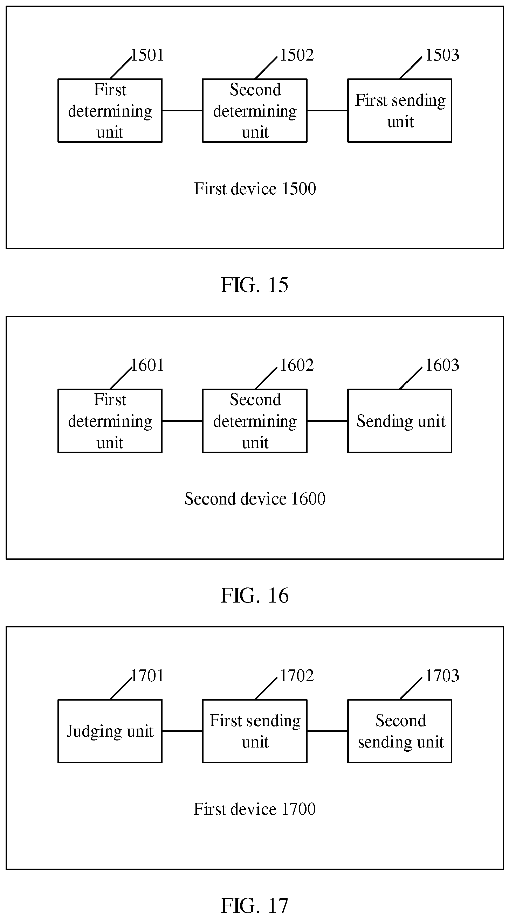

FIG. 15 is a functional block diagram of a first device. The first device 1500 includes: a first determining unit 1501, a second determining unit 1502, and a first sending unit 1503.

The first determining unit 1501 is configured to: when there is first data that needs to be sent in a current slot, determine grant-free resources corresponding to the current slot.

The second determining unit 1502 is configured to determine a first HARQ process corresponding to a first grant-free resource in the grant-free resources.

The first sending unit 1503 is configured to send, in the current slot, the first data to a second device on the first grant-free resource by using the first HARQ process.

It should be noted that the foregoing functional unit can further perform some or all corresponding methods described in the foregoing method embodiments. For a hardware structure on which the foregoing functional unit is based, refer to the embodiment shown in FIG. 11. Details are not further described herein.

In another embodiment, the first device further includes a receiving unit (not shown in FIG. 15). The receiving unit is configured to: before the determining a first HARQ process corresponding to a first grant-free resource in the grant-free resources, receive higher layer signaling or underlying layer signaling sent by the second device, where the higher layer signaling or the underlying layer signaling carries at least one of the following parameters: HARQ_number, HARQ_start, P_n, and M in the foregoing embodiments. Specific parameters carried by the higher layer signaling or the underlying layer signaling may be determined in a manner of calculating a HARQ process number.

FIG. 16 is a functional block diagram of a second device which is not according to the invention and is present for illustration purposes. The second device 1600 includes: a first determining unit 1601, a second determining unit 1602, and a sending unit 1603.

The first determining unit 1601 is configured to: when data sent by a first device is received, determine a grant-free resource used to transmit the data.

The second determining unit 1602 is configured to determine, based on the determined grant-free resource, a HARQ process used to send the data.

The sending unit 1603 is configured to send the data to a buffer corresponding to the HARQ process.

It should be noted that the foregoing functional unit can further perform some or all corresponding methods described in the foregoing method embodiments. For a hardware structure on which the foregoing functional unit is based, refer to the embodiment shown in FIG. 12. Details are not described herein again.

FIG. 17 is a functional block diagram of a first device according to an example which is not according to the invention and is present for illustration purposes. The first device 1700 includes a judging unit 1701, a first sending unit 1702, and a second sending unit 1703.

The judging unit 1701 is configured to: when there is data that needs to be sent in a current slot, determine whether a first HARQ process corresponding to the current slot meets an available condition.

The first sending unit 1702 is configured to: if it is determined that the first HARQ process meets the available condition, send, by using the first HARQ process, the data to a second device in the current slot by using a grant-free resource.

The second sending unit 1703 is configured to: if it is determined that the first HARQ process does not meet the available condition, send, by using a second HARQ process, the data to the second device in the current slot by using the grant-free resource.

It should be noted that the foregoing functional unit can further perform some or all corresponding methods described in the foregoing method embodiments. For a hardware structure on which the foregoing functional unit is based, refer to the embodiment shown in FIG. 13. Details are not described herein again.

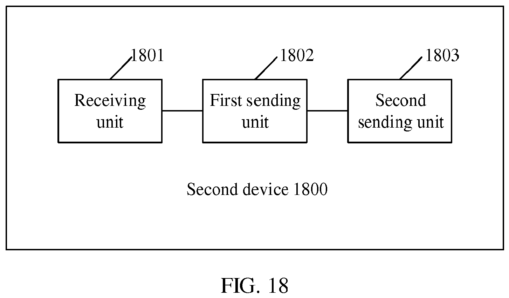

FIG. 18 is a functional block diagram of a second device which is not according to the invention and is present for illustration purposes. The second device 1800 includes a receiving unit 1801, a first sending unit 1802, and a second sending unit 1803.

The receiving unit 1801 is configured to receive first data sent by a first device by using a grant-free resource.

The first sending unit 1802 is configured to: if second data indicated by scheduling information is not received, send the first data to a buffer corresponding to a first HARQ process, where a current slot corresponds to the first HARQ process.

The second sending unit 1803 is configured to: if second data indicated by scheduling information is received again, send the first data to a buffer corresponding to a second HARQ process, and send the second data to the buffer corresponding to the second HARQ process, where the current slot corresponds to the second HARQ process.

It should be noted that the foregoing functional unit can further perform some or all corresponding methods described in the foregoing method embodiments. For a hardware structure on which the foregoing functional unit is based, refer to the embodiment shown in FIG. 14. Details are not described herein again.

In conclusion, the data of the plurality of HARQ processes can be transmitted in the same slot by using the grant-free resources, thereby reducing a data transmission latency.

A person of ordinary skill in the art may understand that all or some of the processes of the methods in the embodiments may be implemented by a computer program instructing related hardware. The program may be stored in a computer readable storage medium. When the program runs, the processes in the method embodiments are performed. The foregoing storage medium includes: any medium that can store program code, for example, a ROM, a random access memory RAM, a magnetic disk, or an optical disk.

**Claims**

1. A data transmission method, performed by a first device, comprising:

   when there is first data that needs to be sent in a current slot, determining (S201) grant-free resources corresponding to the current slot;
   determining (S202) a first hybrid automatic repeat request, HARQ, process corresponding to a first grant-free resource in the grant-free resources;
   sending (S203), in the current slot, the first data to a second device on the first grant-free resource by using the first HARQ process; wherein the method is **characterised by**:
   determining a third HARQ process corresponding to a second grant-free resource in the grant-free resources; and
   if there is third data in a buffer corresponding to the third HARQ process, and the first device determines that the second device does not correctly receive the third data sent by using the third HARQ process, sending, in the current slot, the third data to the second device again on the second grant-free resource by using the third HARQ process.

2. The method according to claim 1, further comprising:

if scheduling information sent by the second device is received and the scheduling information is used to instruct to transmit data in the current slot, determining a second HARQ process indicated by the scheduling information; and

sending, in the current slot to the second device by using a grant-based resource indicated by the scheduling information, second data in a buffer corresponding to the second HARQ process.

3. The method according to claim 2, further comprising:

determining whether the grant-based resource indicated by the scheduling information overlaps the first grant-free resource, wherein
the determining a first HARQ process corresponding to a first grant-free resource in the grant-free resources comprises:
if the grant-based resource does not overlap the first grant-free resource at all, determining the first HARQ process corresponding to the first grant-free resource.

4. The method according to any one of claims 1 to 3, wherein the determining a first HARQ process corresponding to a first grant-free resource in the grant-free resources comprises:

determining a first HARQ process number corresponding to the first grant-free resource by using a first formula; and
determining, based on the first HARQ process number, the first HARQ process that uniquely corresponds to the first HARQ process number; and
the first formula is:

$$\text{HARQ ID} = \text{floor (Slot/P) mod HARQ\_number} + \text{HARQ\_start,}$$

wherein
HARQ ID is the first HARQ process number, Slot is a slot number of the current slot, P is a configuration period of the grant-free resources at a subband to which the first grant-free resource belongs, HARQ number is a maximum quantity of HARQ processes allowed at the subband to which the first grant-free resource belongs, and HARQ_start is a start HARQ process number or a preset offset value at the subband to which the first grant-free resource belongs.

5. The method according to any one of claims 1 to 3, wherein the determining a first HARQ process corresponding to a first grant-free resource in the grant-free resources comprises:

determining, by using a second formula, a second HARQ process number corresponding to the current slot; and
determining, based on the second HARQ process number and information about a subband to which the first grant-free resource belongs, the first HARQ process corresponding to the first grant-free resource; and
the second formula is:

$$\text{HARQ ID} = \text{floor (Slot/P) mod HARQ\_number,}$$

wherein
HARQ ID is the second HARQ process number, Slot is a slot number of the current slot, P is a configuration period of the grant-free resources at the subband to which the first grant-free resource belongs, and HARQ number is a maximum quantity of HARQ processes allowed at the subband to which the first grant-free resource belongs.

6. The method according to any one of claims 1 to 3, wherein the determining a first HARQ process corresponding to a first grant-free resource in the grant-free resources comprises:

> determining, by using a third formula, a number of a HARQ process group corresponding to the current slot; and determining, based on the number of the HARQ process group and information about a subband to which the first grant-free resource belongs, the first HARQ process corresponding to the first grant-free resource; and the third formula is:

$$HARQ\_group\_m = floor\ (Slot\_k/P)\ mod\ M,$$

> wherein
> HARQ_group_m is the number of the HARQ process group, Slot is a slot number of the current slot, P is a configuration period of the grant-free resources at the subband to which the first grant-free resource belongs, and M is a quantity of HARQ process groups.

7.  The method according to any one of claims 1 to 3, wherein the determining a first HARQ process corresponding to a first grant-free resource in the grant-free resources comprises:

> determining that a subband to which the first grant-free resource belongs belongs to a first subband group; and determining, based on a mapping relationship between a subband group and a HARQ process, that a HARQ process corresponding to the first subband group is the first HARQ process, wherein the mapping relationship between the subband group and the HARQ process is also known by the second device.

8.  The method according to any one of claims 1 to 3, wherein the determining a first HARQ process corresponding to a first grant-free resource in the grant-free resources comprises:

> determining, according to a fourth formula, a first HARQ process number corresponding to the first grant-free resource; and
> determining, based on the first HARQ process number, the first HARQ process that uniquely corresponds to the first HARQ process number; and
> the fourth formula is:

$$HARQ\ ID = Slot\ mod\ HARQ\_number + HARQ\_start,$$

> wherein
> HARQ ID is the first HARQ process number, Slot is a slot number of the current slot, HARQ_number is a maximum quantity of HARQ processes allowed at a subband to which the first grant-free resource belongs, and HARQ_start is a preset offset value or a start HARQ process number or an offset value at the subband to which the first grant-free resource belongs.

9.  The method according to claim 4 or 8, wherein before the determining a first HARQ process corresponding to a first grant-free resource in the grant-free resources, the method further comprises:
    receiving higher layer signaling or underlying layer signaling sent by the second device, wherein the higher layer signaling or the underlying layer signaling carries the maximum quantity HARQ_number of HARQ processes allowed at the subband to which the first grant-free resource belongs and/or the parameter HARQ_start indicating the start HARQ process number or the offset value at the subband to which the first grant-free resource belongs.

10. The method according to any one of claims 1 to 3, wherein the determining a first HARQ process corresponding to a first grant-free resource in the grant-free resources comprises:

> determining, by using a fifth formula, a second HARQ process number corresponding to the current slot; and determining, based on the second HARQ process number and information about a subband to which the first grant-free resource belongs, the first HARQ process corresponding to the first grant-free resource; and the fifth formula is:

$$HARQ\ ID = floor\ (Slot/P)\ mod\ HARQ\_number,$$

wherein

HARQ ID is the second HARQ process number, Slot is a slot number of the current slot, P is a configuration period of the grant-free resources at the subband to which the first grant-free resource belongs, and HARQ_number is a maximum quantity of HARQ processes allowed at the subband to which the first grant-free resource belongs.

11. The method according to claim 5 or 10, wherein before the determining a first HARQ process corresponding to a first grant-free resource in the grant-free resources, the method further comprises:

receiving higher layer signaling or underlying layer signaling sent by the second device, wherein the higher layer signaling or the underlying layer signaling carries the maximum quantity HARQ number of HARQ processes allowed at the subband to which the first grant-free resource belongs and/or the configuration period P of the grant-free resources at the subband to which the first grant-free resource belongs.

12. The method according to any one of claims 1 to 3, wherein the determining a first HARQ process corresponding to a first grant-free resource in the grant-free resources comprises:

determining, by using Formula (8), a number of a HARQ process group corresponding to the current slot; and determining, based on the number of the HARQ process group and information about a subband to which the first grant-free resource belongs, the first HARQ process corresponding to the first grant-free resource; and Formula (8) is:

$$\mathrm{HARQ\_group\_m = Slot\_k \ mod \ M} \qquad (8),$$

wherein

HARQ_group_m is the number of the HARQ process group, Slot is a slot number of the current slot, P is a configuration period of the grant-free resources at the subband to which the first grant-free resource belongs, and M is a quantity of HARQ process groups.

13. The method according to claim 6 or 12, wherein before the determining a first HARQ process corresponding to a first grant-free resource in the grant-free resources, the method further comprises:
receiving higher layer signaling or underlying layer signaling sent by the second device, wherein the higher layer signaling or the underlying layer signaling carries the quantity M of the HARQ process groups and/or the configuration period P of the grant-free resources at the subband to which the first grant-free resource belongs.

14. A first device, comprising a memory (1102) and a processor (1101), and a computer program that is stored in the memory and that may be executed by the processor, wherein
the processor (1101) executes the computer program to implement the steps of the data transmission method according to any one of claims 1 to 13.

**Patentansprüche**

1. Datenübertragungsverfahren, das durch eine erste Vorrichtung durchgeführt wird, umfassend:

wenn erste Daten, die in einem aktuellen Zeitschlitz zu senden sind, vorhanden sind, Bestimmen (S201) zuteilungsfreier Ressourcen, die mit dem aktuellen Zeitschlitz korrespondieren;
Bestimmen (S202) eines ersten HARQ-Prozesses (HARQ = "Hybrid Automatic Repeat Request"), der mit einer ersten zuteilungsfreien Ressource in den zuteilungsfreien Ressourcen korrespondiert;
Senden (S203) der ersten Daten in dem aktuellen Zeitschlitz an eine zweite Vorrichtung über die erste zuteilungsfreie Ressource unter Nutzung des ersten HARQ-Prozesses;
wobei das Verfahren durch Folgendes gekennzeichnet ist:

Bestimmen eines dritten HARQ-Prozesses, der mit einer zweiten zuteilungsfreien Ressource in den zuteilungsfreien Ressourcen korrespondiert; und,
wenn dritte Daten in einem Puffer, der mit dem dritten HARQ-Prozess korrespondiert, vorhanden sind und die erste Vorrichtung bestimmt, dass die zweite Vorrichtung die unter Nutzung des dritten HARQ-Prozesses gesendeten dritten Daten nicht korrekt empfängt, erneutes Senden der dritten Daten in dem aktuellen Zeitschlitz an die zweite Vorrichtung über die zweite zuteilungsfreie Ressource unter Nutzung des dritten HARQ-Prozesses.

**2.** Verfahren nach Anspruch 1, ferner umfassend:

wenn durch die zweite Vorrichtung gesendete "Scheduling"-Informationen empfangen werden und die "Scheduling"-Informationen dazu genutzt werden, um zum Übertragen von Daten in dem aktuellen Zeitschlitz anzuweisen, Bestimmen eines durch die "Scheduling"-Informationen angezeigten zweiten HARQ-Prozesses; und Senden zweiter Daten in einem Puffer, der mit dem zweiten HARQ-Prozess korrespondiert, in dem aktuellen Zeitschlitz an die zweite Vorrichtung unter Nutzung einer durch die "Scheduling"-Informationen angezeigten zuteilungsbasierten Ressource.

**3.** Verfahren nach Anspruch 2, ferner umfassend:

Bestimmen, ob die durch die "Scheduling"-Informationen angezeigte zuteilungsbasierte Ressource die erste zuteilungsfreie Ressource überlappt, wobei
das Bestimmen eines ersten HARQ-Prozesses, der mit einer ersten zuteilungsfreien Ressource in den zuteilungsfreien Ressourcen korrespondiert, Folgendes umfasst:
wenn die zuteilungsbasierte Ressource die erste zuteilungsfreie Ressource gar nicht überlappt, Bestimmen des ersten HARQ-Prozesses, der mit der ersten zuteilungsfreien Ressource korrespondiert.

**4.** Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer ersten HARQ-Prozessnummer, die mit der ersten zuteilungsfreien Ressource korrespondiert, unter Nutzung einer ersten Formel; und
Bestimmen des ersten HARQ-Prozesses, der eindeutig mit der ersten HARQ-Prozessnummer korrespondiert, basierend auf der ersten HARQ-Prozessnummer; und
wobei die erste Formel wie folgt lautet:

$$\text{HARQ ID} = \text{floor (Slot/P) mod HARQ\_number} + \text{HARQ\_start},$$

wobei
HARQ ID die erste HARQ-Prozessnummer, Slot eine Zeitschlitznummer des aktuellen Zeitschlitzes, P ein Konfigurationszeitabschnitt der zuteilungsfreien Ressourcen auf einem Teilband, zu dem die erste zuteilungsfreie Ressource gehört, HARQ_number eine maximale Anzahl von HARQ-Prozessen, die auf dem Teilband zugelassen ist, zu dem die erste zuteilungsfreie Ressource gehört, und HARQ_start eine Anfangs-HARQ-Prozessnummer oder ein vorgegebener Offsetwert auf dem Teilband, zu dem die erste zuteilungsfreie Ressource gehört, ist.

**5.** Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer zweiten HARQ-Prozessnummer, die mit dem aktuellen Zeitschlitz korrespondiert, unter Nutzung einer zweiten Formel; und
Bestimmen des ersten HARQ-Prozesses, der mit der ersten zuteilungsfreien Ressource korrespondiert, basierend auf der zweiten HARQ-Prozessnummer und Informationen zu einem Teilband, zu dem die erste zuteilungsfreie Ressource gehört; und
wobei die zweite Formel wie folgt lautet:

$$\text{HARQ ID} = \text{floor (Slot/P) mod HARQ\_number},$$

wobei
HARQ ID die zweite HARQ-Prozessnummer, Slot eine Zeitschlitznummer des aktuellen Zeitschlitzes, P ein Konfigurationszeitabschnitt der zuteilungsfreien Ressourcen auf dem Teilband, zu dem die erste zuteilungsfreie Ressource gehört, und HARQ_number eine maximale Anzahl von HARQ-Prozessen, die auf dem Teilband zugelassen ist, zu dem die erste zuteilungsfreie Ressource gehört, ist.

6. Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer Nummer einer HARQ-Prozessgruppe, die mit dem aktuellen Zeitschlitz korrespondiert, unter Nutzung einer dritten Formel; und
Bestimmen des ersten HARQ-Prozesses, der mit der ersten zuteilungsfreien Ressource korrespondiert, basierend auf der Nummer der HARQ-Prozessgruppe und Informationen zu einem Teilband, zu dem die erste zuteilungsfreie Ressource gehört; und
wobei die dritte Formel wie folgt lautet:

$$HARQ\_group\_m = floor\ (Slot\_k/P)\ mod\ M,$$

wobei
HARQ_group_m die Nummer der HARQ-Prozessgruppe, Slot eine Zeitschlitznummer des aktuellen Zeitschlitzes, P ein Konfigurationszeitabschnitt der zuteilungsfreien Ressourcen auf dem Teilband, zu dem die erste zuteilungsfreie Ressource gehört, und M eine Anzahl von HARQ-Prozessgruppen ist.

7. Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen, dass ein Teilband, zu dem die erste zuteilungsfreie Ressource gehört, zu einer ersten Teilbandgruppe gehört; und
Bestimmen basierend auf einer Zuordnungsbeziehung zwischen einer Teilbandgruppe und einem HARQ-Prozess, dass ein HARQ-Prozess, der mit der ersten Teilbandgruppe korrespondiert, der erste HARQ-Prozess ist, wobei die Zuordnungsbeziehung zwischen der Teilbandgruppe und dem HARQ-Prozess auch der zweiten Vorrichtung bekannt ist.

8. Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer ersten HARQ-Prozessnummer, die mit der ersten zuteilungsfreien Ressource korrespondiert, gemäß einer vierten Formel; und
Bestimmen des ersten HARQ-Prozesses, der eindeutig mit der ersten HARQ-Prozessnummer korrespondiert, basierend auf der ersten HARQ-Prozessnummer; und
wobei die vierte Formel wie folgt lautet:

$$HARQ\ ID = Slot\ mod\ HARQ\_number + HARQ\_start,$$

wobei
HARQ ID die erste HARQ-Prozessnummer, Slot eine Zeitschlitznummer des aktuellen Zeitschlitzes, HARQ_number eine maximale Anzahl von HARQ-Prozessen, die auf einem Teilband zugelassen ist, zu dem die erste zuteilungsfreie Ressource gehört, und HARQ_start ein vorgegebener Offsetwert oder eine Anfangs-HARQ-Prozessnummer oder ein Offsetwert auf dem Teilband, zu dem die erste zuteilungsfreie Ressource gehört, ist.

9. Verfahren nach Anspruch 4 oder 8, wobei das Verfahren vor dem Bestimmen eines ersten HARQ-Prozesses, der mit einer ersten zuteilungsfreien Ressource in den zuteilungsfreien Ressourcen korrespondiert, ferner Folgendes umfasst:
Empfangen einer Signalisierung einer höheren Schicht oder einer Signalisierung einer darunterliegenden Schicht, die durch die zweite Vorrichtung gesendet wird, wobei die Signalisierung einer höheren Schicht oder die Signalisierung einer darunterliegenden Schicht die maximale Anzahl HARQ_number von HARQ-Prozessen, die auf dem Teilband zugelassen ist, zu dem die erste zuteilungsfreie Ressource gehört, und/oder den Parameter HARQ_start, der die Anfangs-HARQ-Prozessnummer oder den Offsetwert auf dem Teilband anzeigt, zu dem die erste zuteilungsfreie Ressource gehört, übermittelt.

**10.** Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer zweiten HARQ-Prozessnummer, die mit dem aktuellen Zeitschlitz korrespondiert, unter Nutzung einer fünften Formel; und
Bestimmen des ersten HARQ-Prozesses, der mit der ersten zuteilungsfreien Ressource korrespondiert, basierend auf der zweiten HARQ-Prozessnummer und Informationen zu einem Teilband, zu dem die erste zuteilungsfreie Ressource gehört; und
wobei die fünfte Formel wie folgt lautet:

$$\text{HARQ ID} = \text{floor (Slot/P) mod HARQ\_number,}$$

wobei
HARQ ID die zweite HARQ-Prozessnummer, Slot eine Zeitschlitznummer des aktuellen Zeitschlitzes, P ein Konfigurationszeitabschnitt der zuteilungsfreien Ressourcen auf dem Teilband, zu dem die erste zuteilungsfreie Ressource gehört, und HARQ_number eine maximale Anzahl von HARQ-Prozessen, die auf dem Teilband zugelassen ist, zu dem die erste zuteilungsfreie Ressource gehört, ist.

**11.** Verfahren nach Anspruch 5 oder 10, wobei das Verfahren vor dem Bestimmen eines ersten HARQ-Prozesses, der mit einer ersten zuteilungsfreien Ressource in den zuteilungsfreien Ressourcen korrespondiert, ferner Folgendes umfasst:
Empfangen einer Signalisierung einer höheren Schicht oder einer Signalisierung einer darunterliegenden Schicht, die durch die zweite Vorrichtung gesendet wird, wobei die Signalisierung einer höheren Schicht oder die Signalisierung einer darunterliegenden Schicht die maximale Anzahl HARQ_number von HARQ-Prozessen, die auf dem Teilband zugelassen ist, zu dem die erste zuteilungsfreie Ressource gehört, und/oder den Konfigurationszeitabschnitt P der zuteilungsfreien Ressourcen auf dem Teilband, zu dem die erste zuteilungsfreie Ressource gehört, übermittelt.

**12.** Verfahren nach einem der Ansprüche 1 bis 3, wobei das Bestimmen eines ersten HARQ-Prozesses, der mit einer ersten zuteilungsfreien Ressource in den zuteilungsfreien Ressourcen korrespondiert, Folgendes umfasst:

Bestimmen einer Nummer einer HARQ-Prozessgruppe, die mit dem aktuellen Zeitschlitz korrespondiert, unter Nutzung einer Formel (8); und
Bestimmen des ersten HARQ-Prozesses, der mit der ersten zuteilungsfreien Ressource korrespondiert, basierend auf der Nummer der HARQ-Prozessgruppe und Informationen zu einem Teilband, zu dem die erste zuteilungsfreie Ressource gehört; und
wobei die Formel (8) wie folgt lautet:

$$\text{HARQ\_group\_m} = \text{Slot\_k mod M} \quad (8),$$

wobei
HARQ_group_m die Nummer der HARQ-Prozessgruppe, Slot eine Zeitschlitznummer des aktuellen Zeitschlitzes, P ein Konfigurationszeitabschnitt der zuteilungsfreien Ressourcen auf dem Teilband, zu dem die erste zuteilungsfreie Ressource gehört, und M eine Anzahl von HARQ-Prozessgruppen ist.

**13.** Verfahren nach Anspruch 6 oder 12, wobei das Verfahren vor dem Bestimmen eines ersten HARQ-Prozesses, der mit einer ersten zuteilungsfreien Ressource in den zuteilungsfreien Ressourcen korrespondiert, ferner Folgendes umfasst:
Empfangen einer Signalisierung einer höheren Schicht oder einer Signalisierung einer darunterliegenden Schicht, die durch die zweite Vorrichtung gesendet wird, wobei die Signalisierung einer höheren Schicht oder die Signalisierung einer darunterliegenden Schicht die Anzahl M der HARQ-Prozessgruppen und/oder den Konfigurationszeitabschnitt P der zuteilungsfreien Ressourcen auf dem Teilband, zu dem die erste zuteilungsfreie Ressource gehört, übermittelt.

**14.** Erste Vorrichtung, umfassend einen Speicher (1102) und einen Prozessor (1101) und ein Computerprogramm, das in dem Speicher gespeichert ist und das durch den Prozessor ausführbar ist, wobei

der Prozessor (1101) das Computerprogramm ausführt, um die Schritte des Datenübertragungsverfahrens nach einem der Ansprüche 1 bis 13 zu implementieren.

**Revendications**

1. Procédé de transmission de données, réalisé par un premier dispositif, comportant les étapes consistant :

   lorsqu'il existe des premières données qu'il est nécessaire d'émettre dans un créneau actuel, à déterminer (S201) des ressources sans octroi correspondant au créneau actuel ;
   à déterminer (S202) un premier processus de demande de répétition automatique hybride, HARQ, correspondant à une première ressource sans octroi parmi les ressources sans octroi ;
   à envoyer (S203), dans le créneau actuel, les premières données à un deuxième dispositif sur la première ressource sans octroi en utilisant le premier processus HARQ;
   le procédé étant **caractérisé par** les étapes consistant à :

   déterminer un troisième processus HARQ correspondant à une deuxième ressource sans octroi parmi les ressources sans octroi ; et
   s'il existe des troisièmes données dans un tampon correspondant au troisième processus HARQ, et si le premier dispositif détermine que le deuxième dispositif ne reçoit pas correctement les troisièmes données émises en utilisant le troisième processus HARQ, envoyer à nouveau, dans le créneau actuel, les troisièmes données au deuxième dispositif sur la deuxième ressource sans octroi en utilisant le troisième processus HARQ.

2. Procédé selon la revendication 1, comportant en outre les étapes consistant :

   si des informations de programmation émises par le deuxième dispositif sont reçues et si les informations de programmation sont utilisées pour donner comme consigne d'émettre des données dans le créneau actuel, à déterminer un deuxième processus HARQ indiqué par les informations de programmation ; et
   à envoyer au deuxième dispositif, dans le créneau actuel en utilisant une ressource basée sur un octroi indiquée par les informations de programmation, des deuxièmes données dans un tampon correspondant au deuxième processus HARQ.

3. Procédé selon la revendication 2, comportant en outre :

   le fait de déterminer si la ressource basée sur un octroi indiquée par les informations de programmation chevauche la première ressource sans octroi,
   la détermination d'un premier processus HARQ correspondant à une première ressource sans octroi parmi les ressources sans octroi comportant :
   si la ressource basée sur un octroi ne chevauche pas du tout la première ressource sans octroi, la détermination du premier processus HARQ correspondant à la première ressource sans octroi.

4. Procédé selon l'une quelconque des revendications 1 à 3, la détermination d'un premier processus HARQ correspondant à une première ressource sans octroi parmi les ressources sans octroi comportant les étapes consistant à :

   déterminer un premier numéro de processus HARQ correspondant à la première ressource sans octroi en utilisant une première formule ; et
   déterminer, d'après le premier numéro de processus HARQ, le premier processus HARQ qui correspond de manière unique au premier numéro de processus HARQ ; et
   la première formule étant :

   $$\text{HARQ ID} = \text{partie entière inférieure (Slot/P) mod HARQ\_number} + \text{HARQ\_start},$$

   HARQ ID étant le premier numéro de processus HARQ, Slot étant un numéro de créneau du créneau actuel, P étant une période de configuration des ressources sans octroi au niveau d'une sous-bande à laquelle appartient la première ressource sans octroi, HARQ_number étant une quantité maximum de processus HARQ autorisée au niveau de la sous-bande à laquelle appartient la première ressource sans octroi, et HARQ_start étant un numéro de processus HARQ de départ ou une valeur de décalage préétablie au niveau de la sous-bande à laquelle appartient la première ressource sans octroi.

**5.** Procédé selon l'une quelconque des revendications 1 à 3, la détermination d'un premier processus HARQ correspondant à une première ressource sans octroi parmi les ressources sans octroi comportant les étapes consistant à :

déterminer, en utilisant une deuxième formule, un deuxième numéro de processus HARQ correspondant au créneau actuel ; et
déterminer, d'après le deuxième numéro de processus HARQ et des informations concernant une sous-bande à laquelle appartient la première ressource sans octroi, le premier processus HARQ correspondant à la première ressource sans octroi ; et
la deuxième formule étant :

$$\text{HARQ ID} = \text{partie entière inférieure (Slot/P) mod HARQ\_number,}$$

HARQ ID étant le deuxième numéro de processus HARQ, Slot étant un numéro de créneau du créneau actuel, P étant une période de configuration des ressources sans octroi au niveau de la sous-bande à laquelle appartient la première ressource sans octroi, et HARQ_number étant une quantité maximum de processus HARQ autorisée au niveau de la sous-bande à laquelle appartient la première ressource sans octroi.

**6.** Procédé selon l'une quelconque des revendications 1 à 3, la détermination d'un premier processus HARQ correspondant à une première ressource sans octroi parmi les ressources sans octroi comportant les étapes consistant à :

déterminer, en utilisant une troisième formule, un numéro d'un groupe de processus HARQ correspondant au créneau actuel ; et
déterminer, d'après le numéro du groupe de processus HARQ et des informations concernant une sous-bande à laquelle appartient la première ressource sans octroi, le premier processus HARQ correspondant à la première ressource sans octroi ; et
la troisième formule étant :

$$\text{HARQ\_group\_m} = \text{partie entière inférieure (Slot\_k/P) mod M,}$$

HARQ_group_m étant le numéro du groupe de processus HARQ, Slot étant un numéro de créneau du créneau actuel, P étant une période de configuration des ressources sans octroi au niveau de la sous-bande à laquelle appartient la première ressource sans octroi, et M étant une quantité de groupes de processus HARQ.

**7.** Procédé selon l'une quelconque des revendications 1 à 3, la détermination d'un premier processus HARQ correspondant à une première ressource sans octroi parmi les ressources sans octroi comportant les étapes consistant à :

déterminer qu'une sous-bande à laquelle appartient la première ressource sans octroi appartient à un premier groupe de sous-bandes ; et
déterminer, d'après une relation de mappage entre un groupe de sous-bandes et un processus HARQ, qu'un processus HARQ correspondant au premier groupe de sous-bandes est le premier processus HARQ, la relation de mappage entre le groupe de sous-bandes et le processus HARQ étant également connue du deuxième dispositif.

**8.** Procédé selon l'une quelconque des revendications 1 à 3, la détermination d'un premier processus HARQ correspondant à une première ressource sans octroi parmi les ressources sans octroi comportant les étapes consistant à :

déterminer, selon une quatrième formule, un premier numéro de processus HARQ correspondant à la première ressource sans octroi ; et
déterminer, d'après le premier numéro de processus HARQ, le premier processus HARQ qui correspond de manière unique au premier numéro de processus HARQ ; et
la quatrième formule étant :

$$\text{HARQ ID} = \text{Slot mod HARQ\_number} + \text{HARQ\_start},$$

HARQ ID étant le premier numéro de processus HARQ, Slot étant un numéro de créneau du créneau actuel, HARQ_number étant une quantité maximum de processus HARQ autorisée au niveau d'une sous-bande à laquelle appartient la première ressource sans octroi, et HARQ_start étant une valeur de décalage préétablie ou un numéro de processus HARQ de départ ou une valeur de décalage au niveau de la sous-bande à laquelle appartient la première ressource sans octroi.

9. Procédé selon la revendication 4 ou 8, le procédé comportant en outre, avant la détermination d'un premier processus HARQ correspondant à une première ressource sans octroi parmi les ressources sans octroi :
la réception d'une signalisation de couche supérieure ou d'une signalisation de couche sous-jacente émise par le deuxième dispositif, la signalisation de couche supérieure ou la signalisation de couche sous-jacente transportant la quantité maximum HARQ_number de processus HARQ autorisée au niveau de la sous-bande à laquelle appartient la première ressource sans octroi et/ou le paramètre HARQ_start indiquant le numéro de processus HARQ de départ ou la valeur de décalage au niveau de la sous-bande à laquelle appartient la première ressource sans octroi.

10. Procédé selon l'une quelconque des revendications 1 à 3, la détermination d'un premier processus HARQ correspondant à une première ressource sans octroi parmi les ressources sans octroi comportant les étapes consistant à :

déterminer, en utilisant une cinquième formule, un deuxième numéro de processus HARQ correspondant au créneau actuel ; et
déterminer, d'après le deuxième numéro de processus HARQ et des informations concernant une sous-bande à laquelle appartient la première ressource sans octroi, le premier processus HARQ correspondant à la première ressource sans octroi ; et
la cinquième formule étant :

$$\text{HARQ ID} = \text{partie entière inférieure (Slot/P) mod HARQ\_number},$$

HARQ ID étant le deuxième numéro de processus HARQ, Slot étant un numéro de créneau du créneau actuel, P étant une période de configuration des ressources sans octroi au niveau de la sous-bande à laquelle appartient la première ressource sans octroi, et HARQ_number étant une quantité maximum de processus HARQ autorisée au niveau de la sous-bande à laquelle appartient la première ressource sans octroi.

11. Procédé selon la revendication 5 ou 10, le procédé comportant en outre, avant la détermination d'un premier processus HARQ correspondant à une première ressource sans octroi parmi les ressources sans octroi :
la réception d'une signalisation de couche supérieure ou d'une signalisation de couche sous-jacente émises par le deuxième dispositif, la signalisation de couche supérieure ou la signalisation de couche sous-jacente transportant la quantité maximum HARQ_number de processus HARQ autorisée au niveau de la sous-bande à laquelle appartient la première ressource sans octroi et/ou la période de configuration P des ressources sans octroi au niveau de la sous-bande à laquelle appartient la première ressource sans octroi.

12. Procédé selon l'une quelconque des revendications 1 à 3, la détermination d'un premier processus HARQ correspondant à une première ressource sans octroi parmi les ressources sans octroi comportant les étapes consistant à :

déterminer, en utilisant la formule (8), un numéro d'un groupe de processus HARQ correspondant au créneau actuel ; et
déterminer, d'après le numéro du groupe de processus HARQ et des informations concernant une sous-bande à laquelle appartient la première ressource sans octroi, le premier processus HARQ correspondant à la première ressource sans octroi ; et
la formule (8) étant :

$$\text{HARQ\_group\_m} = \text{Slot\_k mod M (8)},$$

HARQ_group_m étant le numéro du groupe de processus HARQ, Slot étant un numéro de créneau du créneau actuel, P étant une période de configuration des ressources sans octroi au niveau de la sous-bande à laquelle appartient la première ressource sans octroi, et M étant une quantité de groupes de processus HARQ.

**13.** Procédé selon la revendication 6 ou 12, le procédé comportant en outre, avant la détermination d'un premier processus HARQ correspondant à une première ressource sans octroi parmi les ressources sans octroi :
la réception d'une signalisation de couche supérieure ou d'une signalisation de couche sous-jacente émises par le deuxième dispositif, la signalisation de couche supérieure ou la signalisation de couche sous-jacente transportant la quantité M des groupes de processus HARQ et/ou la période de configuration P des ressources sans octroi au niveau de la sous-bande à laquelle appartient la première ressource sans octroi.

**14.** Premier dispositif, comportant une mémoire (1102) et un processeur (1101), et un programme informatique qui est stocké dans la mémoire et qui peut être exécuté par le processeur,
le processeur (1101) exécutant le programme informatique pour mettre en oeuvre les étapes du procédé de transmission de données selon l'une quelconque des revendications 1 à 13.

**Wireless communications system 100**

FIG. 1

```
┌─────────────────┐                          ┌─────────────────┐
│  First device   │                          │  Second device  │
└─────────────────┘                          └─────────────────┘
         │                                             │
┌─────────────────────────────┐                        │
│ S201. When there is first    │                        │
│ data that needs to be sent   │                        │
│ in a current slot, determine │                        │
│ grant-free resources         │                        │
│ corresponding to the         │                        │
│ current slot                 │                        │
└─────────────────────────────┘                        │
┌─────────────────────────────┐                        │
│ S202. Determine a first HARQ │                        │
│ process corresponding to a   │                        │
│ first grant-free resource in │                        │
│ the grant-free resources     │                        │
└─────────────────────────────┘                        │
         │       S203. Send the first data             │
         │─────────────────────────────────────────────▶│
         │                              ┌────────────────────────────────┐
         │                              │ S204. When the data sent by the│
         │                              │ first device is received, the  │
         │                              │ second device determines       │
         │                              │ grant-free resources used to   │
         │                              │ transmit the data              │
         │                              └────────────────────────────────┘
         │                              ┌────────────────────────────────┐
         │                              │ S205. Determine, based on the  │
         │                              │ determined grant-free resource,│
         │                              │ a HARQ process used to send the│
         │                              │ data                           │
         │                              └────────────────────────────────┘
         │                              ┌────────────────────────────────┐
         │                              │ S206. Send the data to a buffer│
         │                              │ corresponding to the HARQ      │
         │                              │ process                        │
         │                              └────────────────────────────────┘
         │                                             │
```

FIG. 2

FIG. 3A

FIG. 3B

```
┌─────────────────────┐                      ┌─────────────────────┐
│    First device     │                      │    Second device    │
└─────────────────────┘                      └─────────────────────┘
            │                                            │
┌───────────────────────┐                                │
│ S401. Determine a second│                               │
│ HARQ process indicated by│                              │
│ scheduling information  │                               │
└───────────────────────┘                                │
            │                                            │
┌───────────────────────┐                                │
│ S402. When it is detected that│                         │
│ there is data to be transmitted,│                       │
│ determine grant-free resources│                         │
│ corresponding to a current slot│                        │
└───────────────────────┘                                │
            │                                            │
┌───────────────────────┐                                │
│ S403. Determine a first│                                │
│ HARQ process corresponding│                             │
│ to a first grant-free resource in│                      │
│ the grant-free resources│                               │
└───────────────────────┘                                │
            │                                            │
            │  S404. Send the first data and the second data
            │─────────────────────────────────────────►  │
            │                                            │  ╭─── S405. Receive
            │                                            │  │    the first data and
            │                                            │  ◄──  the second data
            │                                            │
```

FIG. 4

| Subband 4 | 12 | 13 | 14 | 15 | 12 | 13 | 14 | 15 | 12 | 13 |
| Subband 3 | 8 | 9 | 10 | 11 | 8 | 9 | 10 | 11 | 8 | 9 |
| Subband 2 | 4 | 5 | 6 | 7 | 4 | 5 | 6 | 7 | 4 | 5 |
| Subband 1 | 0 | 1 | 2 | 3 | 0 | 1 | 2 | 3 | 0 | 1 |

FIG. 5A

| Subband 4 | 12 | 13 | 12 | 13 | 12 | 13 | 12 | 13 | 12 | 13 |
|-----------|----|----|----|----|----|----|----|----|----|----|
| Subband 3 | 8  | 9  | 10 | 11 | 8  | 9  | 10 | 11 | 8  | 9  |
| Subband 2 | 4  | 5  | 6  | 7  | 4  | 5  | 6  | 7  | 4  | 5  |
| Subband 1 | 0  | 1  | 2  | 3  | 0  | 1  | 2  | 3  | 0  | 1  |

## FIG. 5B

| Subband 4 | 0 | 1 | 2 | 3 | 0 | 1 | 2 | 3 | 0 | 1 |
|-----------|---|---|---|---|---|---|---|---|---|---|
| Subband 3 | 0 | 1 | 2 | 3 | 0 | 1 | 2 | 3 | 0 | 1 |
| Subband 2 | 0 | 1 | 2 | 3 | 0 | 1 | 2 | 3 | 0 | 1 |
| Subband 1 | 0 | 1 | 2 | 3 | 0 | 1 | 2 | 3 | 0 | 1 |

## FIG. 6

|           | Process group 1 | Process group 2 | Process group 3 | Process group 4 | Process group 1 | Process group 2 | Process group 3 | Process group 4 | Process group 1 | Process group 2 |
|-----------|---|---|---|---|---|---|---|---|---|---|
| Subband 4 | 3 | 3 | 3 | 3 | 3 | 3 | 3 | 3 | 3 | 3 |
| Subband 3 | 2 | 2 | 2 | 2 | 2 | 2 | 2 | 2 | 2 | 2 |
| Subband 2 | 1 | 1 | 1 | 1 | 1 | 1 | 1 | 1 | 1 | 1 |
| Subband 1 | 0 | 0 | 0 | 0 | 0 | 0 | 0 | 0 | 0 | 0 |

## FIG. 7

FIG. 8

First device

Second device

S901. When there is data that needs to be sent in a current slot, determine whether a first HARQ process corresponding to the current slot meets an available condition

S902. If a result of the determining in S901 is yes, send the data by using the first HARQ process

S903. If a result of the determining in S901 is no, send the data by using a second HARQ process

S904. Receiv the data

FIG. 9

| | HARQ_p=0 HARQ_s=1 | | HARQ_p=4 HARQ_s=5 | | HARQ_p=0 HARQ_s=1 | | HARQ_p=4 HARQ_s=5 | | HARQ_p=0 HARQ_s=1 | |
|---|---|---|---|---|---|---|---|---|---|---|
| GF subband 4 | | | | | Initial transmission of TB 3 ID=1 | | | | | |
| GF subband 3 | | | | | | | | | | |
| GF subband 2 | | | Initial transmission of TB 2 ID=4 | | | | | | | |
| GF subband 1 | Initial transmission of TB 1 ID=0 | | | | | | Initial transmission of TB 4 ID=4 | | | |
| Slot 0 | | HARQ_p=2 HARQ_s=3 | | HARQ_p=6 HARQ_s=7 | | HARQ_p=2 HARQ_s=3 | | HARQ_p=6 HARQ_s=7 | | HARQ_p=2 HARQ_s=3 |

| | | | | | | | | | | |
|---|---|---|---|---|---|---|---|---|---|---|
| GB subband 2 | | | Retransmission of TB 1 ID=0 | | | | | | | |
| GB subband 1 | | | | Retransmission of TB 1 ID=0 | | | | | | |

FIG. 10

FIG. 11

FIG. 12

FIG. 13

FIG. 14

FIG. 15

FIG. 16

FIG. 17

FIG. 18

**REFERENCES CITED IN THE DESCRIPTION**

**Non-patent literature cited in the description**

- **SAMSUNG.** Discussion on grant-free/contention-based non-orthogonal multiple access. *3GPP DRAFT; R1-166752, 3RD GENERATION PARTNERSHIP PROJECT (3GPP),* 21 August 2016, vol. RAN WG1 (Gothenburg

- **ERICSSON.** On UL grant-free transmission. *3GPP DRAFT; R1-1701871, 3RD GENERATION PARTNERSHIP PROJECT (3GPP),* 12 February 2017, vol. RAN WG1 (Athens